Europäisches Patentamt

European Patent Office

Office européen des brevets

(19)

(11) EP 0 905 982 A2

(12) EUROPEAN PATENT APPLICATION

(43) Date of publication:
31.03.1999 Bulletin 1999/13

(51) Int Cl.$^6$: H04N 7/36, H04N 7/26

(21) Application number: 98402336.6

(22) Date of filing: 23.09.1998

(84) Designated Contracting States:
AT BE CH CY DE DK ES FI FR GB GR IE IT LI LU
MC NL PT SE
Designated Extension States:
AL LT LV MK RO SI

(30) Priority: 30.09.1997 FR 9712141
06.10.1997 FR 9712420

(71) Applicant: CANON KABUSHIKI KAISHA
Tokyo (JP)

(72) Inventors:
• Amonou, Isabelle
  35235 Thorigne-Fouillard (FR)
• Charrier, Maryline
  35000 Rennes (FR)
• Dierieck, Claude
  35510 Cesson Sévigné (FR)

(74) Representative: Rinuy, Santarelli
14, avenue de la Grande Armée,
B.P. 237
75822 Paris Cédex 17 (FR)

(54) **Method and device for coding and decoding data, notably sequences of digital images**

(57) A method of coding a set of data representing physical quantities, said set being composed of sub-sets $(f_n)$, is characterised in that it includes, for each of the sub-sets, the steps of dividing (E2) the sub-set into blocks of data to be coded $(A_{n,m})$ and into source blocks $(D_{n,m,1}, D_{n,m,K})$, of dividing (E4) at least one reference sub-set $(g_{n-1})$ into reference blocks $(D_{n-1,m,j})$, and then, for each of the data blocks to be coded, the steps of matching (E6) the block to be coded with one of the reference blocks and, if a matching criterion is not satisfied (E7), of selecting (E9) a predetermined number of source blocks $(D_{n,m,1}, D_{n,m,K})$ in said sub-set, of determining (E10) a transformation $(T_{n,m})$ between the selected source blocks and the block to be coded. The invention applies to the coding of sequences of images.

Fig. 5

## Description

The present invention concerns, in general terms, a method and device for coding data, and a method and device for decoding data. Data coding and decoding are aimed in particular at compressing and decompressing sets of data.

A compressed data set can, in being stored to memory, occupy a memory space which is reduced compared with the initial uncompressed set, or can be transmitted more rapidly, or at a lower transmission rate, than the initial uncompressed set.

These data can in principle be any data and represent physical quantities. In favoured applications, sets of data are considered which are fixed images, sequences or series of images, sound or other mono or multidimensional signals. Hereinafter consideration will be given particularly to the coding and decoding of fixed images or of sequences of images, since images are known on the one hand to occupy a large amount of memory space and on the other hand to require a higher transmission rate, or a long transmission time, when it is desired to transmit them.

Numerous methods of coding sequences of images exist at the present time. One of them is the so-called MPEG (Motion Picture Expert Group) coding, which consists overall of coding images with respect to one or more other images selected in the sequence, known as reference images, and periodically an image as a fixed image, that is to say without reference to another image.

This image coded with respect to itself, known as an "intra" image, is divided into blocks, which are coded by discreet cosine transformation (DCT). These images are necessary for refreshing and allow random access in the sequence; however, the compression ratio of these images is low.

An image coded with respect to one or more other images is also divided into blocks. Each block is coded by a mechanism of estimation and compensation of movement, using a block which it is necessary to seek in the reference images, and then the error is coded by discreet cosine transformation. The "best" block for coding the current block is generally sought in only one window of the reference image, in order to reduce the search time, which otherwise could be too long. However, this type of coding remains fairly slow.

In addition, this type of coding is not suitable for low transmission rates, around a few tens of kilobits, but is limited to transmission rates generally greater than 1.5 megabits per second.

The present invention aims to remedy the drawbacks of the prior art by providing a method and device for coding data, and the corresponding decoding method and device, having a high data compression ratio whilst being rapid at the time of coding and decoding.

The invention is situated in the field of coding and decoding of sequences of digital images by blocks, with losses. It is based on the theory of the fixed point, which is disclosed in the French patent application filed under the number 96 10636 on 30 August 1996.

In order to give a clearer idea, the concepts and terms used hereinafter are stated here.

"Transformation" will refer to a global contractive mapping in a metric space, that is to say a mapping converging, in this space, towards a fixed point which is the sole element of the space which is left invariant by this contractive mapping.

For example, for a sequence of images, the space under consideration is the space of the images, and the fixed point is then an image which it is sought to reconstruct.

The method of successive approximations makes it possible to approach iteratively the fixed point of a contraction, starting from an arbitrary element. It is a case of applying the contraction under consideration to the arbitrary element and then applying the same contraction to the result previously obtained, and so on. This method makes it possible to converge towards the fixed point.

If a set of data is divided into blocks and a transformation is determined for each of the blocks, each of the transformations being a contractive mapping, the set of these transformations forms a global contractive mapping for the signal.

A block is a group of digital samples of the digital signal. In the case of an image signal, a block is a group of pixels. The block is for example square, rectangular or triangular in shape.

The invention proposes a method of coding a set of data representing physical quantities, said set being composed of sub-sets,

characterised in that it includes, for each of the sub-sets, the steps of:

- division of the sub-set into blocks of data to be coded, and into source blocks,

  then, for each of the blocks of data to be coded, the steps of:

  - selection of a predetermined number of source blocks in said sub-set,
  - determination of a transformation between the selected source blocks and the block to be coded.

Correlatively, the invention proposes a device for coding a set of data representing physical quantities, said set being composed of sub-sets,

characterised in that it has:

- means of dividing sub-sets into blocks of data to be coded and into source blocks,
- means of selecting, for each of the blocks of data to be coded of each of the sub-sets, a predetermined number of source blocks in the respective sub-set of each of the blocks of data to be coded, and

- means of determining a transformation between the selected source blocks and the block to be coded.

The coding according to the invention results in a set of transformations which forms a global contractive mapping for the signal under consideration.

The invention makes it possible to obtain a high compression ratio for the data, which can then be transmitted at a low transmission rate, of around a few tens of kilobits per second, whilst offering a good quality of reconstruction of the data.

The invention affords a rapid compression and decompression of the data.

The invention applies both to cases where both a rapid compression and a rapid decompression of sequences of images is desired, and to cases where only a rapid decompression is desired.

According to a preferred embodiment, the invention proposes a method of coding a set of data representing physical quantities, said set being composed of sub-sets,

characterised in that it includes, for each of the sub-sets, the steps of:

- division of the sub-set into blocks of data to be coded and into source blocks,
- division of at least one reference sub-set into reference blocks,

then, for each of the blocks of data to be coded, the steps of:

- estimation of the movement of the block to be coded with one of the reference blocks and, if an estimation criterion is not satisfied,
- selection of a predetermined number of source blocks in said sub-set,
- determination of a transformation between the source blocks selected and the block to be coded.

Correlatively, the invention proposes a device for coding a set of data representing physical quantities, said set being composed of sub-sets,

characterised in that it has

- means of dividing sub-sets into blocks of data to be coded and into source blocks,
- means of dividing at least one reference sub-set into reference blocks, for each of the sub-sets,
- means of estimating the movement, for each of the blocks of data to be coded, of the block to be coded with one of the reference blocks and, if an estimation criterion is not satisfied,
- means of selecting, for each of the data blocks of each of the sub-sets, a predetermined number of source blocks in the respective sub-set of each of the blocks of data to be coded, and

- means of determining a transformation between the selected source blocks and the block to be coded.

This embodiment combines block movement estimation and coding by transformation. Movement estimation makes it possible to use the time correlation existing in the data to be coded. Movement estimation is for example block matching, which is simple to implement.

The data blocks coded by block matching are decoded by block copying, and are therefore reconstructed accurately. These accurately decoded blocks are used for iteratively decoding the other blocks by the method of successive approximations, which then converges more rapidly. Decoding is then more rapid, and performed in only a few iterations.

In addition, coding by block matching requires few bits for storing and/or transmitting the coded block.

According to a preferred characteristic, the estimation criterion for the movement estimation step includes a measurement of a first distance between the block to be coded and the reference block, which affords a simple and reliable implementation of the invention.

According to other preferred characteristics:

- the transformation minimises a second distance between the block to be coded and its approximation calculated by applying the transformation to the selected source blocks,
- the calculation of the second distance includes the calculation of a difference between the values of the data of the block to be coded and the values of its approximation calculated by applying the transformation to the source blocks,
- the second distance is the root mean square error calculated between the values of the block to be coded and the values of the block resulting from the application of the approximation to the source blocks.

These characteristics afford a simple and reliable implementation of the invention.

According to other preferred characteristics of the invention, the transformation is a contractive mapping which is:

- a multilinear approximation, or
- a multilinear approximation combined with a geometric transformation, or again
- a polynomial on the values of the coefficients of the source blocks.

According to a preferred characteristic, said at least one reference sub-set is a sub-set of the set or, preferably, a sub-set of the set which was previously coded and then decoded. The second case allows more precise decoding of the data.

In another aspect, the source blocks are selected in a part of the sub-set which depends on the part in which is situated the block to be coded in the sub-set in the course of coding. Coding is then more precise.

According to preferred characteristics, the source blocks have a size which is determined according to the size of the block to be coded, notably the source blocks have a size which is a multiple by a factor $F^2$ of that of the block to be coded and are sub-sampled by the factor F, where F is an integer, or the source blocks have the same size as the block to be coded.

According to other preferred characteristics, the block to be coded is of predetermined size, or the block to be coded is of variable size, according to a size criterion.

In the latter case, the coding method includes the calculation of a third distance between the block to be coded and the approximation calculated by applying the transformation to the source blocks. The size criterion consists of comparing the third distance with a threshold, and, if the third distance is greater than the threshold and if a minimum block size has not been reached, the block currently being coded is divided into blocks of smaller size.

The coding device includes means adapted to implement the previously disclosed characteristics.

In another aspect, the invention concerns a method of decoding a set of data representing physical quantities, the set being composed of sub-sets which each include coded representations of data blocks, each of the blocks being coded by means of a transformation between the block and first source blocks formed in the sub-set,

characterised in that it includes, for each of the blocks of each of the sub-sets to be decoded, the iterative application of the transformation to second source blocks for decoding the block, the second source blocks being formed in a sub-set containing blocks predetermined for the first iteration, and in a sub-set containing blocks decoded at the previous iteration for the following iterations.

According to a preferred embodiment, the method of decoding a set of data representing physical quantities, the set being composed of sub-sets which each include coded representations of data blocks,

is characterised in that it includes, for each of the blocks of each of the sub-sets to be decoded, the steps of:

- seeking whether the block is coded by block movement estimation,
  and, in the case of a negative response, the block then being coded by means of a transformation between the block and first source blocks formed in the sub-set:
- iterative application of the transformation to second source blocks for decoding the block, the second source blocks being formed in a sub-set containing blocks predetermined for the first iteration, and in a sub-set containing blocks decoded at the previous iteration for the following iterations.

In the case of a positive response at the seeking step, the block is decoded by copying a matching block determined by block matching. This decoding is rapid and simple to implement.

The invention also concerns a device for decoding a set of data representing physical quantities, the set being composed of sub-sets which each include coded representations of data blocks, each of the blocks being coded by means of a transformation between the block and the source blocks selected in the respective sub-set,

characterised in that it includes means of applying the transformation to second source blocks, for each of the blocks of each of the sub-sets to be decoded, the second source blocks being formed in a sub-set containing blocks predetermined from the first iteration, and in a sub-set containing blocks decoded at the previous iteration for the following iterations.

The invention also concerns a device for decoding a set of data representing physical quantities, the set being composed of sub-sets which include coded representations of data blocks,

characterised in that it has:

- means of seeking, for each of the blocks of each of the sub-sets to be decoded, whether the block is coded by block movement estimation,
  and, in the event of a negative response, the block then being coded by means of a transformation between the block and source blocks selected in the respective sub-set,
- means of applying the transformation to second source blocks for reconstructing the block, the second source blocks being formed in a sub-set containing blocks predetermined for the first iteration, and a sub-set containing blocks decoded at the previous iteration for the following iterations.

The decoding device and method make it possible to restore the data quickly and with a high degree of precision.

A second aspect of the invention is to allow the enlargement or reduction of decoded images.

The enlargement or reduction of decoded images makes it possible to adapt the latter to the size of a display screen, larger or smaller than the standard size of the images, or to enlarge a particular detail for example.

Image enlargement methods have been proposed. They consist overall of effecting duplications of pixels, or interpolations in the image which was previously decoded. These operations are performed independently of the decoding, that is to say after the images have been decoded to their original resolution.

Likewise, image reduction methods have been proposed. They include operations of sub-sampling, with or without filtering, a previously decoded image. These operations are also performed after the images have been decoded at their original resolution.

These resolution modification methods have in common the fact of being performed separately from the decoding, and consequently are not combined with the latter.

The present invention aims to remedy the drawbacks of the prior art by providing a method and device for decoding data which makes it possible not only to choose the resolution of the decoded data but also to obtain a good quality of decoded data, notably when the resolution is increased compared with the initial data.

The invention proposes a method of decoding a coded set of data representing physical quantities, the set including sub-sets which each include coded representations of blocks of data, each of the blocks being coded by means of a transformation between the block and source blocks selected from at least one source sub-set,

characterised in that it includes, for each of the blocks of the first of the sub-sets to be decoded, the steps of:

- forming secondary blocks including a number of coefficients which is proportional to that of the source blocks,
- applying the transformation to the secondary blocks in order to form a decoded block,
- so as to form a reference sub-set including the decoded blocks,

then, for each of the blocks of each of the other sub-sets to be decoded, the step of:
- selecting secondary blocks from at least one reference sub-set,

applying the transformation to the secondary blocks in order to form a decoded block,
- so as to form a reference sub-set including the decoded blocks.

Correlatively, the invention proposes a device for decoding a coded set of data representing physical quantities, the set including sub-sets which each have coded representations of data blocks, each of the blocks being coded by means of a transformation between the block and source blocks selected from at least one source sub-set,

characterised in that it includes, for each of the blocks of the first of the sub-sets to be decoded:

- means of forming secondary blocks including a number of coefficients which is proportional to that of the source blocks,
- means of applying the transformation to the secondary blocks in order to form a decoded block,

so as to form a reference sub-set including the decoded blocks,

then, for each of the blocks of each of the other sub-sets to be decoded:
- means of selecting secondary blocks from at least one reference sub-set,
- means of applying the transformation to the secondary blocks in order to form a decoded block,

so as to form a reference sub-set including the decoded blocks.

The resolution modification is effected at the time of decoding. The two operations are combined and simultaneous.

The invention always uses the same number of compressed data, whatever the decoding resolution. The quality of the reconstructed image after decoding is therefore independent of the resolution chosen.

According to a preferred characteristic, the formation step includes the multiplication of the source blocks by a predetermined scale factor, to form secondary blocks having a number of coefficients dependent on the number of the coefficients of the source blocks and the scale factor.

According to other preferred characteristics, the transformation is a multilinear approximation, or a multilinear approximation combined with a geometric transformation, or again the transformation is a polynomial. The transformation is chosen so as to offer a good quality of image reconstruction after decoding.

According to a preferred characteristic, for the first sub-set to be decoded, the secondary blocks are formed in a predetermined sub-set.

The set of data is preferably a digital image, or a sequence of digital images. This is because the invention is particularly suited for changing the image resolution.

The decoding device has means adapted to implement the previously disclosed characteristics.

These means are incorporated in:

- a controller,
- a read-only memory containing a program for decoding each of the data blocks, and
- a random access memory containing registers adapted to record variables modified during the running of the said program.

The present invention also concerns a data processing device, a communication device, such as computer, printer or facsimile apparatus, including the preceding coding and decoding device.

The present invention also concerns a storage medium, such as a floppy disk or a CD-ROM.

The advantages of these devices and storage medium are similar to those previously described.

The characteristics and advantages of the present invention will emerge more clearly from a reading of several preferred embodiments illustrated by the accompanying drawings, in which:

- Figure 1 depicts schematically a data coding device according to the invention,
- Figure 2 depicts schematically a data decoding device according to the invention,
- Figure 3 depicts an embodiment of the data coding device according to the invention,
- Figure 4 depicts an embodiment of the data decoding device according to the invention,
- Figure 5 is a data coding algorithm according to a first embodiment of the invention,
- Figure 6 is an image divided into blocks during its coding according to the first embodiment of the invention,
- Figure 7 is an image divided into blocks during its coding according to the first embodiment of the invention,
- Figures 8a to 8f depict blocks to be coded and associated source blocks,
- Figure 9 is a data decoding algorithm according to the first embodiment of the invention,
- Figure 10 is a data coding algorithm according to a second embodiment of the invention,
- Figure 11 is an image divided into blocks during its coding according to the second embodiment of the invention,
- Figure 12 is a division tree associated with the image of Figure 11,
- Figure 13 is a data decoding algorithm according to the second embodiment of the invention,
- Figure 14 is a data coding algorithm according to a third embodiment of the invention,
- Figures 15a to 15f depict blocks to be coded and associated source blocks,
- Figure 16 is a data decoding algorithm according to the third embodiment of the invention,
- Figure 17 is a data coding algorithm according to a fourth embodiment of the invention,
- Figure 18 is a data decoding algorithm according to the fourth embodiment of the invention,
- Figure 19 is a data coding algorithm according to a fifth embodiment of the invention,
- Figure 20 depicts schematically the coding according to the fifth embodiment of the invention,
- Figure 21 is an image divided into blocks during its coding according to the invention,
- Figure 22 is an image divided into blocks during its coding according to the invention,
- Figures 23a to 23f depict blocks to be coded and associated source blocks,
- Figure 24 is a data decoding algorithm according to the fifth embodiment of the invention,
- Figure 25 depicts schematically the decoding according to the fifth embodiment of the invention.

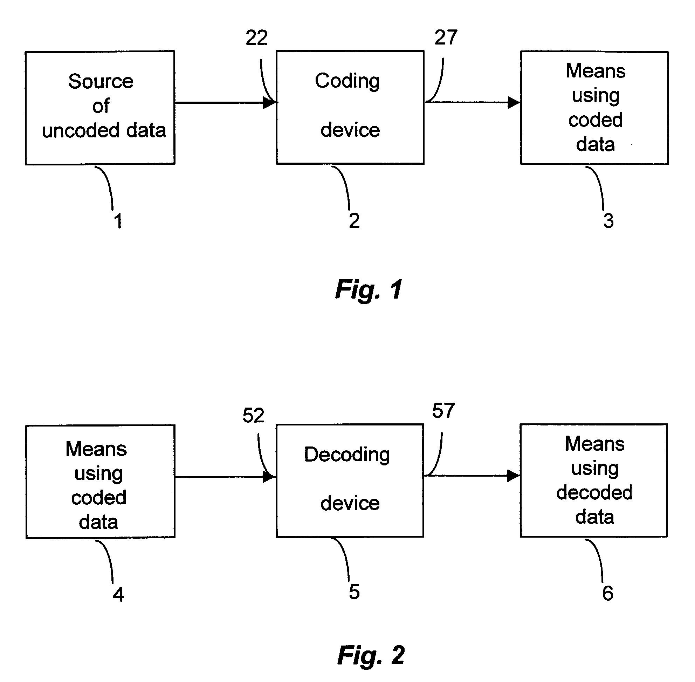

According to a chosen embodiment depicted in **Figure 1**, a data coding device 2 according to the invention has an input 22 to which a source 1 of uncoded data is connected. The source 1 has for example a memory means, such as a random access memory, hard disk, diskette or compact disk, for storing uncoded data, this memory means being associated with a suitable reading means for reading the data therein. A means for recording the data in the memory means can also be provided.

The source 1 can for example be a digital camera in the case of a signal representing a fixed image, or a video camera in the case of an image sequence or a microphone in the case of a sound signal.

Means 3 using coded data are connected at the output 27 of the coding device 2.

The user means 3 include for example means of storing coded data, and/or means of transmitting coded data.

**Figure 2** depicts a device 5 for decoding data coded by the device 2.

Means 4 using coded data are connected at the input 52 of the decoding device 5. The means 4 include for example coded data storage means, and/or coded data receiving means which are adapted to receive the coded data transmitted by the transmission means 3.

Means 6 using decoded data are connected at the output 57 of the decoding device 5. The user means 6 are for example image display means, or sound restoration means, depending on the nature of the data processed.

The coding device and the decoding device can be integrated into a single digital appliance, for example a digital camera.

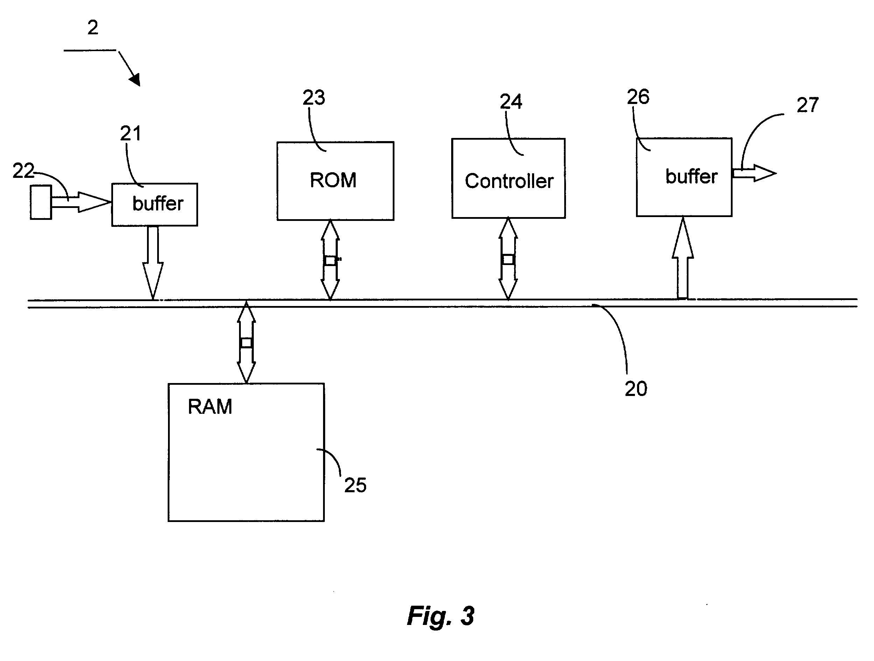

One embodiment of a data coding device 2 is depicted in **Figure 3**.

The coding device 2 has a data and address bus 20 to which are connected:

- an input buffer memory 21, also connected to the input 22 of the device, for temporarily storing the data to be coded,
- a read-only memory (ROM) 23 in which a coding algorithm, which will be disclosed hereinafter, is stored,
- a controller 24 for implementing the coding algorithm,
- a random access memory (RAM) 25 for storing in registers parameters modified during the execution of the coding algorithm, and
- an output buffer memory 26 also connected to the output 27 of the device.

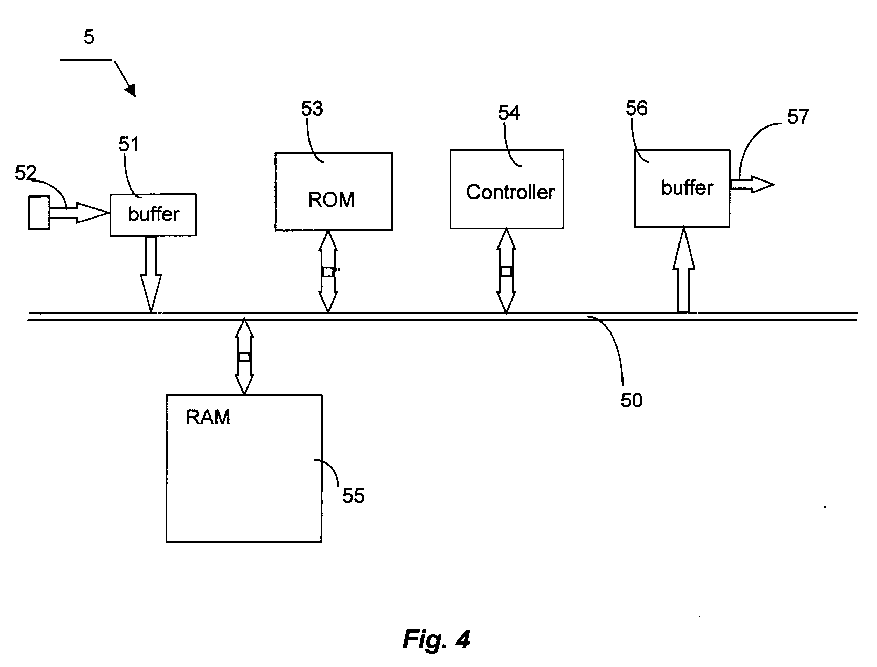

An embodiment of the data decoding device 5 is depicted in **Figure 4**.

The decoding device 5 has a data and address bus 50 to which are connected:

- an input buffer memory 51, also connected to the input 52 of the device, for temporarily storing the data to be decoded,
- a read-only memory (ROM) 53 in which a decoding algorithm, which will be disclosed hereinafter, is stored,
- a controller 54 for implementing the decoding algorithm,
- a random access memory (RAM) 55 for storing in registers parameters modified during the execution of the decoding algorithm, and
- an output buffer memory 56 also connected to the output 57 of the device.

The operation of the coding 2 and decoding 5 devices will be detailed during the description of different embodiments of the corresponding algorithms. The following algorithmes can be, totally or partially, memorised in any storage medium capable of cooperating with the controller. This storage medium is integrated or can be detachably mountable on the data coding and/or decoding device. For example, the storage medium is a floppy disk, or a CD-ROM.

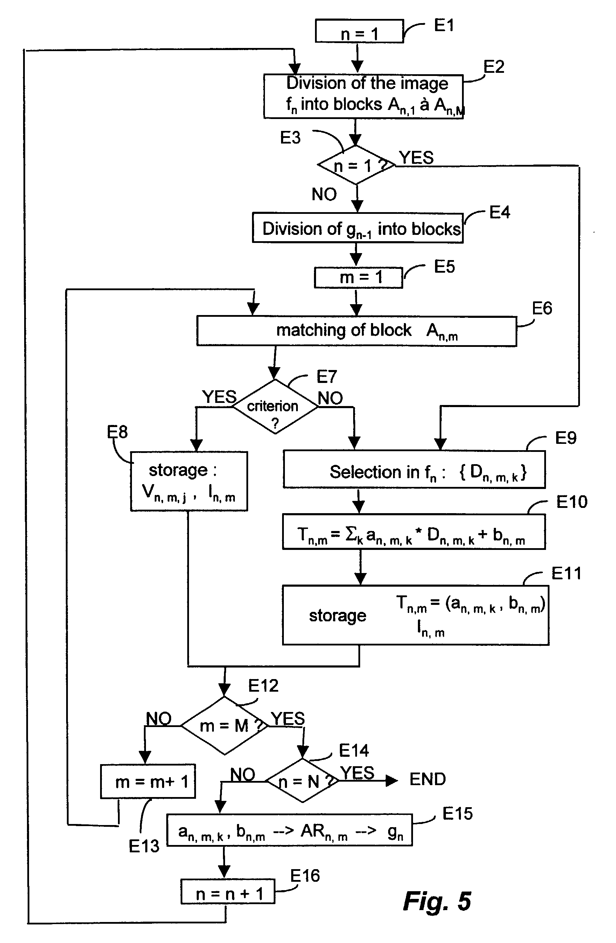

According to the embodiment chosen and depicted in **Figure 5**, the invention applies to the coding of a set of data representing physical quantities which is a sequence of digital images $f_1$ to $f_N$, where N is an integer.

The coding consists overall of coding each image of the sequence block by block. A block is coded by matching with a block of a reference image if a quality criterion is complied with, or by determining a transformation between the block to be coded and source blocks selected in the image currently being coded.

Any image $f_n$ in the sequence, with n between 1 and N, is a grey-level image, having for example 128 x 96 pixels with 256 levels.

The algorithm depicted in Figure 5 includes steps E1 to E16 which perform the coding of the sequence of digital images. The processing is performed image by image. Overall, an image in the sequence is coded block by block, either by block matching with a block of a reference image, or by a transformation between the block to be coded and blocks adjacent to this block.

Step E1 is an initialisation at which the parameter n is initialised to 1, so as to consider first of all the first image in the sequence.

The following step E2 is a division of the image under consideration $f_n$ into a predetermined number M of blocks $A_{n,1}$ to $A_{n,M}$ of adjacent pixels. The number M of blocks can be predetermined, or can be a parameter set by the user of the algorithm. In this embodiment, the blocks $A_{n,1}$ to $A_{n,M}$ are adjacent, without overlap. In a variant which is not shown, the blocks can overlap, in order to limit the block effects on decoding, to the detriment of the compression ratio.

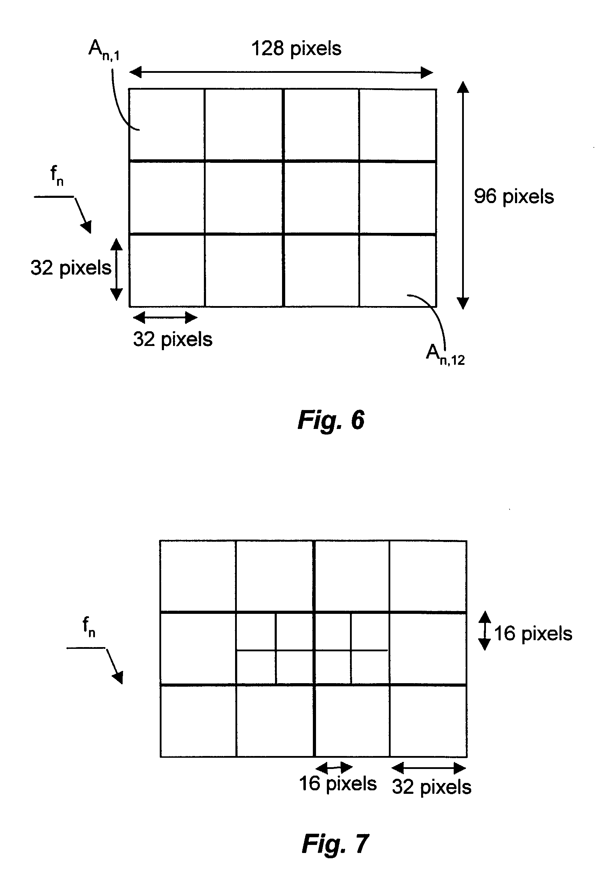

According to a first variant of this embodiment, depicted in **Figure 6**, the blocks all have the same predetermined size, and are for example square blocks of 32 x 32 pixels in the case of the image with 128 x 96 pixels. Division of the image is uniform throughout the image. According to a second variant depicted in **Figure 7**, the size of the blocks, whilst being predetermined, depends on the location of the blocks in the image: in a given area of the image, for example a central area liable to contain more details, the blocks are smaller than at the edges of the image. This given area will then be coded more finely than the rest of the image. This variant is particularly interesting for video-telephony since, in this case, the images mainly reproduce the faces of the users, which are generally situated at the centre of the images.

Two different sizes of block are depicted in Figure 7: 32 x 32 and 16 x 16 pixels. However, a higher number of sizes can be envisaged for specific applications, notably if it is known that the quantity of information varies a great deal from one area to another of the images to be coded.

In all cases, division of the image results in a set of M blocks $A_{n,1}$ to $A_{n,M}$ stored in memory 25. The blocks $A_{n,1}$ to $A_{n,M}$ will be compressed, or coded, one after the other, in any order. This order is preferably predetermined and is then the order in which the blocks will then be decompressed, or decoded, which makes it unnecessary to mark the blocks with an index or by coordinates. In a variant, it is possible to mark the blocks and to associate the marking, index or coordinates, with the coded block, which makes it possible to decompress the blocks in any order, which can be different from the order used on compression.

Step E2 is followed by step E3, which is a test on the value of the parameter n. If the parameter n is equal to 1, that is to say for the first image of the sequence, step E3 is followed directly by step E9, which will be described hereinafter. This is because, for the first image of the sequence, matching is not possible, since there is no reference image.

If at step E3 the parameter n is greater than 1, step E3 is followed by step E4. The latter is the division of one or more reference images into blocks of adjacent pixels, stored in memory 25. The size of the blocks depends on the size of the blocks to be coded $A_{n,m}$. Preferably, the blocks of the reference images are $F^2$ times larger than the blocks to be coded, where F is an integer for example equal to two, which makes it possible to use a large number of details of the reference image. The blocks of the reference images are next sub-sampled by the factor F, in order to work on blocks having the same number of pixels as the blocks to be coded. According to a variant which is simpler to implement, the blocks of the reference images have the same size as the blocks to be coded.

The following step E5 is an initialisation of a parameter m to 1, in order to consider the first block $A_{n,1}$ in the image $f_n$.

According to a preferred embodiment which is more particularly taken into account here, a single reference image $g_{n-1}$ is considered, which is the image preceding the image $f_n$, previously coded and then decoded according to the invention.

Step E5 is followed by step E6, at which the current coding block $A_{n,m}$ is coded by estimation of movement with respect to the reference image. According to the embodiment chosen, the movement estimation is a block matching: in the reference image $g_{n-1}$, a matching block $D_{n-1,m,j}$ is sought which is as similar as possible to the block to be coded, according to a predetermined criterion, for example a distance measurement $d(A_{n,m}, D_{n-1,m,j})$ between the block to be coded and the matching block. The distance is calculated between the grey levels of the block to be coded $A_{n,m}$ and the grey levels of the matching block.

The distance can be the absolute value of the sum of the differences, or the root mean square error, or again the absolute value of the greatest difference, calculated between the source block $A_{n,m}$ and the matching block.

In a preferred embodiment, the distance is the root mean square error calculated between the grey levels of the block to be coded $A_{n,m}$ and the grey levels of the matching block.

The matching block for which the criterion is minimised is selected.

According to variant embodiments, the movement estimation is a block matching combined with a geometric transformation, or again an affine model.

The following step E7 is a test for checking whether the matching criterion is satisfied, that is to say if it is below a predetermined threshold. If the response is positive, the relative position of the matching block $D_{n-1,m,j}$ in the reference image $g_{n-1}$, with respect to the position of the block to be coded $A_{n,m}$, in the image currently being coded $f_n$, that is to say the movement vector $V_{n,m,j}$, is stored in memory 25, at step E8. An indicator $I_{n,m}$ is also stored, to indicate that the block under consideration is coded by block matching. This indicator is for example an additional bit set to the value 1. The movement vector $V_{n,m,j}$ and the indicator $I_{n,m}$ represent the coding information of the block $A_{n,m}$.

Step E8 is followed by step E12, which will be described hereinafter.

If the response is negative at step E7, this means that the coding by block matching does not give a satisfactory result, for the block under consideration. Step E7 is then followed by step E9, at which source blocks $D_{n,m,1}$ to $D_{n,m,k}$ are selected in the image currently being coded $f_n$.

The number K of source blocks is predetermined, and is for example equal to 4. In a variant, the number K is a parameter for adjusting the algorithm. The source blocks are selected by their location as a function of the location of the block to be coded $A_{n,m}$. In general terms, the source blocks are selected in the region which depends on the region of the blocks to be coded.

Preferably, the two regions are similar, that is to say the source blocks are adjacent blocks partially covered by the block to be coded.

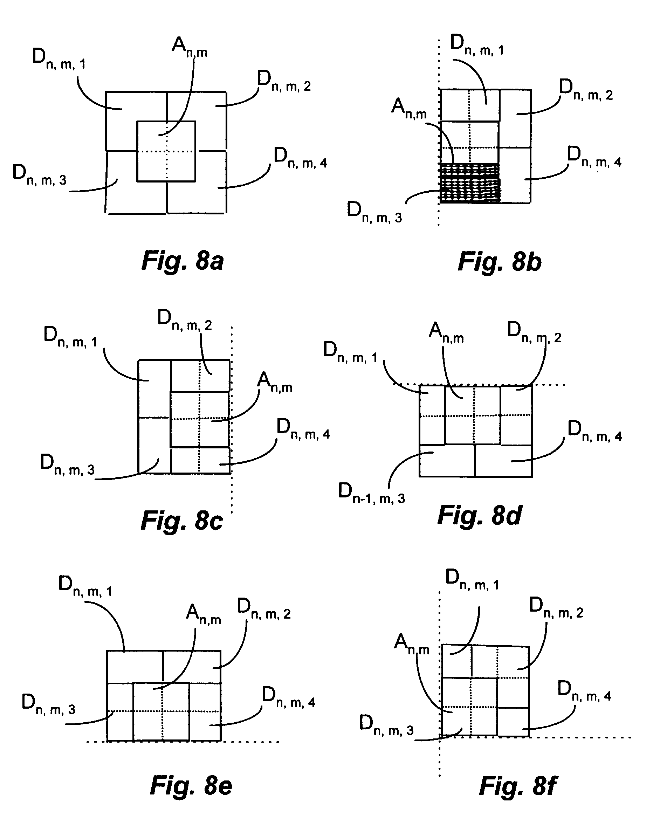

**Figures 8a to 8f** depict difference examples of source block selection. In each of Figures 8a to 8f, the block to be coded $A_{n,m}$ has been superimposed on the source blocks $D_{n,m,1}$ to $D_{n,m,4}$. In the six examples, four source blocks of the same size as the block to be coded $A_{n,m}$ are considered.

In Figure 8a, the block to be coded $A_{n,m}$ is in a central part of the image $f_n$; the four source blocks are adjacent and the block to be coded is roughly centred on the four selected source blocks.

In Figures 8b to 8e, the block to be coded $A_{n,m}$ is situated on an edge of the image represented by a dotted line. Two of the source blocks partially overlap the other two source blocks, so that the block to be coded overlaps part of each of the source blocks.

In Figure 8f, the block to be coded $A_{n,m}$ is in a corner of the image, and the four source blocks overlap partially, so that the block to be coded overlaps part of each of the source blocks.

In a variant, when the block to be coded is on an edge or in the corner of the image, the four source blocks are adjacent, and two or three of the source blocks are truncated and supplemented either by a uniformly grey supplement, or by a supplement determined by extension of the image, for example by symmetry or by periodisation of the image.

Step E9 is followed by step E10, at which a transformation between the source blocks and the block to be coded is calculated. The transformation is a contractive mapping.

According to a preferred embodiment, the transformation is a multilinear approximation, of the form: $T_{n,m} = \{a_{n,m,k}, b_{n,m}\}$ making it possible to construct the block $AR_{n,m} = \Sigma_k (a_{n,m,k} \times D_{n,m,k}) + b_{n,m}$.

In this expression, $a_{n,m,k}$ is a scale function, here a constant function, or coefficient, for a given source block $D_{n,m,k}$ and with a norm less than unity, and $b_{n,m}$ is a shift function of the grey levels, here a constant function, or coefficient, for the block to be coded $A_{n,m}$. The function $a_{n,m,k}$ applies to each of the pixels of the block $D_{n,m,k}$, which amounts here to multiplying all the pixels by the coefficient $a_{n,m,k}$.

The functions, here the coefficients $A_{n,m,k}$ and $b_{n,m}$, are determined so as to minimise a distance d $(A_{n,m}, AR_{n,m})$ between the block to be coded $A_{n,m}$ and the reconstructed block $AR_{n,m}$ by applying the transformation $T_{n,m}$ to the source blocks according to the formula given above.

According to an embodiment which is simple to implement, the functions $a_{n,m,k}$ and $b_{n,m}$ are made discreet and a limited number of possible values for the coefficients $a_{n,m,k}$ are tested. For example, each coefficient $a_{n,m,k}$ can take two values, a positive value and the opposite value. All the combinations of coefficients $a_{n,m,k}$ are tested, and for each combination the coefficient $b_{n,m}$ is chosen so as to minimise the envisaged distance.

The distance is calculated between the grey levels of the block to be coded $A_{n,m}$ and the grey levels of the block $AR_{n,m}$ resulting from the application of the transformation to the source blocks $D_{n,m,1}$ to $D_{n,m,K}$.

The distance can be the absolute value of the sum of the differences, or the root mean square error, or again the absolute value of the greatest difference, calculated between the source block $A_{n,m}$ and the reconstructed block $AR_{n,m}$ by applying the transformation $T_{n,m}$ to the source blocks.

In a preferred embodiment of the invention, the distance is the root mean square error calculated between the grey levels of the block to be coded $A_{n,m}$ and the grey levels of the block $AR_{n,m}$ resulting from the application of the approximation to the source blocks $D_{n,m,1}$ to $D_{n,m,K}$.

The combination $T_{n,m} = \{a_{n,m,k},\ b_{n,m}\}$ which minimises the distance is stored at step E11 in the memory 25 of the coding device 2 (Figure 3) as a compressed form of the block $A_{n,m}$. The set of transformations $T_{n,m}$ and movement vectors relating to the image $f_n$ forms a compressed image $h_n$.

According to other embodiments:

- the transformation combines a multilinear approximation calculated on the source blocks and geometric transformations, such as rotation, of the source blocks,
- the transformation is of polynomial form, for example second or third order, calculated on the values of the pixels of the source blocks. This type of transformation gives more precise results, whilst taking longer to calculate.

In all cases, the transformation is a contractive mapping.

The following step E12 is a test for checking whether m is equal to M, that is to say whether the block which has just been coded is the last of the current image. If there remains at least one block to be coded in the image $f_n$, step E12 is followed by step E13 at which the parameter m is incremented by one unit, in order to consider the following block in the image $f_n$. Step E13 is followed by the previously described step E6.

When the block which has just been coded is the last of the current image, step E12 is followed by step E14, which is a test for checking whether the image $f_n$ which has just been compressed is the last of the sequence. If this is not the case, step E14 is followed by step E15, which is the construction of the decompressed image $g_n$. The image $g_n$ is formed by the decoding of the coded forms of the blocks. This decoding is identical to the one performed by the decoding algorithm, which will be described hereinafter. The decoding consists overall, for each block, of seeking the reference block in the reference image if the block has been coded by block matching, or iteratively applying the transformation $T_{n,m}$ to the source blocks. The image $g_n$ is stored in memory 25 in order to be used for coding the following image $f_{n+1}$.

Step E15 is followed by step E16 for incrementing the parameter n by one unit. Step E16 is followed by the previously described E2. Where n=N, that is to say for the last image of the sequence, it is not necessary here to reconstruct the image $g_N$.

When the response at step E14 is positive, all the images $f_1$ to $f_N$ of the sequence have been compressed into compressed images $h_1$ to $h_N$.

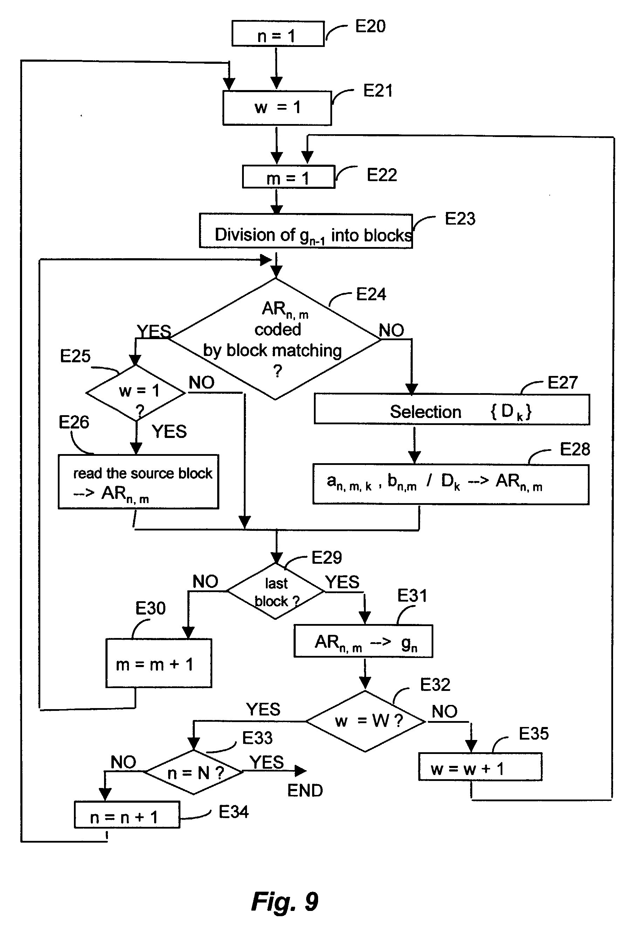

With reference to **Figure 9**, the first embodiment of an algorithm for decoding the compressed sequence of digital images includes steps E20 to E35. The transformations determined on decoding are contractive. The decoding will therefore consist of effecting several iterations in order to converge towards the fixed point.

Step E20 is an initialisation at which the parameter n is initialised to 1, in order to process the first compressed image $h_1$ of the sequence.

The following step E21 is the initialisation of a parameter w to the value one. The parameter w is an integer which varies between one and a predetermined value W which represents the number of iterations to be effected in order to decode an image of the sequence. As will be seen, the iterative decoding concerns more particularly the blocks coded by a transformation. In a variant, the number of iterations depends on a convergence criterion based on the comparison of the images decoded at two consecutive iterations, convergence being obtained if the images compared are sufficiently similar. According to another variant, the activity of each of the blocks to be coded is measured before coding, for example by calculating the variance of the blocks. The higher the variance of a given block, the more complex details it contains. The number of decoding iterations is determined at the time of coding and is associated with the coding data for the image in order to be used at the time of decoding.

The following step E22 is the initialisation of the parameter m to 1, in order to consider the first block to be reconstructed. The blocks are preferably processed in the same order as on compression, which avoids having to store and process an index, or coordinates, in order to reference the blocks.

The following step E23 is the division of the current reference image $g_{n-1}$ into blocks of adjacent pixels, which are reference blocks stored in memory 55. Step E23 is identical to step E4.

The following step E24 is a test for determining whether the block in the course of construction $AR_{n,m}$ has been coded by movement estimation, for example block matching. The test consists of analysing the value of the indicator $I_{n,m}$ and finding out whether the indicator $I_{n,m}$ is at the value one.

If the response is positive, then the following step E25 is a test for determining whether it is the first iteration which is current, for the decoding of the image currently being processed. If the response is positive, step E25 is followed by step E26, which consists of applying a movement compensation corresponding to the movement estimation. For example, step E26 consists of reading in the reference image $g_{n-1}$ the matching block $D_{n-1,m,j}$ which is determined by the movement vector forming the compressed form $V_{n,m,j}$ and copying this block as a decoded block $AR_{n,m}$. Step E26 is followed by step E29, which will be described hereinafter.

If the response is negative at step E25, this means that the first image decoding iteration has already been performed; the decoded block $AR_{n,m}$ has already been formed by reading the matching block, which makes it unnecessary to repeat step E26. Step E25 is then followed directly by step E29.

If the response is negative at step E24, this means that the block currently being decoded has been coded by means of a transformation. Step E24 is followed by step E27, which is the selection of source blocks $D_1$ to $D_K$ in a source image for the image currently being decoded $f_n$, relative to the block to be reconstructed $AR_{n,m}$.

For the first decoding iteration for a given image, the source image is an image possibly including blocks of the image under consideration which has just been decoded by block copying, and including other arbitrarily fixed blocks, for example uniformly grey. For the following iterations, the source image is the image decoded at the previous decoding iteration for the image under consideration. The previous decoding iteration results in an image formed by blocks decoded according to two types: the blocks decoded by block copying and those decoded by the application of a linear approximation to source blocks.

The source blocks are selected in the source image in a similar fashion to that of coding (step E9), with the same possible variants.

Step E27 is followed by step E28, at which the transformation $T_{n,m}$ defined by the functions $a_{n,m,k}$ and $b_{n,m}$ is applied to the source blocks $D_1$ to $D_K$ selected at the previous step E27, according to the formula:

$$AR_{n,m} = \Sigma_k \, (a_{n,m,k} \times D_k) + b_{n,m}.$$

Step E28 results in the decoded block $AR_{n,m}$, for the current iteration, which is stored in memory 55.

The following step E29 is a test for determining whether the block which has just been decompressed is the last of the image currently being decompressed. If this is not the case, step E29 is followed by step E30, at which the parameter m is incremented by one unit in order to consider the following block. Step E30 is followed by the previously described step E24.

When all the blocks of the current image have been decompressed, step E29 is followed by step E31, at which the decompressed image $g_n$ for the current iteration is reconstructed and for example displayed on a screen, and/or stored to memory. In general terms, step E31 is the transfer of the image $g_n$ to the user means 6.

The following step E32 is a test for determining whether the current iteration is the last. If the response is positive, step E32 is followed by step E33, which is a test for determining whether the image which has just been decompressed is the last image of the sequence. If there remains at least one image to be decompressed, step E33 is followed by step E34, at which the parameter n is incremented by one unit, in order to consider the following image in the sequence. Step E34 is followed by the previously described step E21.

If the response is negative at step E32, this means that all the iterations have not been performed for the image under consideration. Step E32 is followed by step E35, at which the parameter w is incremented by one unit in order to pass to the following iteration. Step E35 is followed by the previously described step E22.

In a variant, the algorithm of Figure 9 is modified in order to decode, first of all, all the blocks which have been coded by block matching, and then forming an intermediate image including all these blocks decoded by block copying, and arbitrarily fixed blocks, for example uniformly grey. This intermediate image is then used as a source image for the first decoding iteration for the blocks coded by a transformation. The following iterations are then performed as previously described.

This variant makes it possible to better exploit the time correlation, since the blocks decoded by copying are used to form a first source image having more details. Convergence is then attained with a reduced number of iterations.

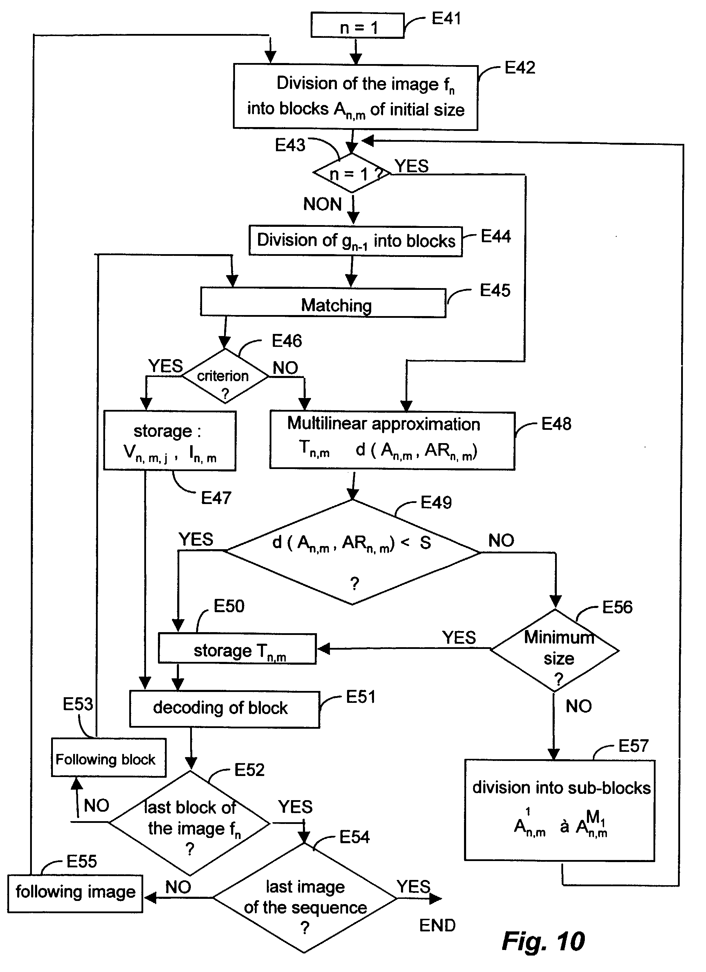

Another embodiment of the coding method according to the invention is depicted in **Figures 10, 11 and 12** in the form of an algorithm including steps E41 to E57 stored in memory 23 (Figure 3).

In this embodiment, the size of the blocks to be coded is determined in an adaptive fashion, according to the quantity of information present in the blocks to be coded and according to the "movement" of the blocks to be coded with respect to the reference image, that is to say the modifications between the pixels in the block to be coded and the pixels in the reference blocks of the reference image.

A division tree, here a quaternary tree, is associated with each image to be coded. The quaternary tree represents the particular division of each image. Each compressed image $h_n$ has a set of coding data, that is to say movement vector, indicator and transformation $T_{n,m}$, and the associated quaternary tree.

Step E41 is an initialisation of a parameter n to 1, in order to consider first of all the first image $f_1$ of the sequence.

The following step E42 is the division of the

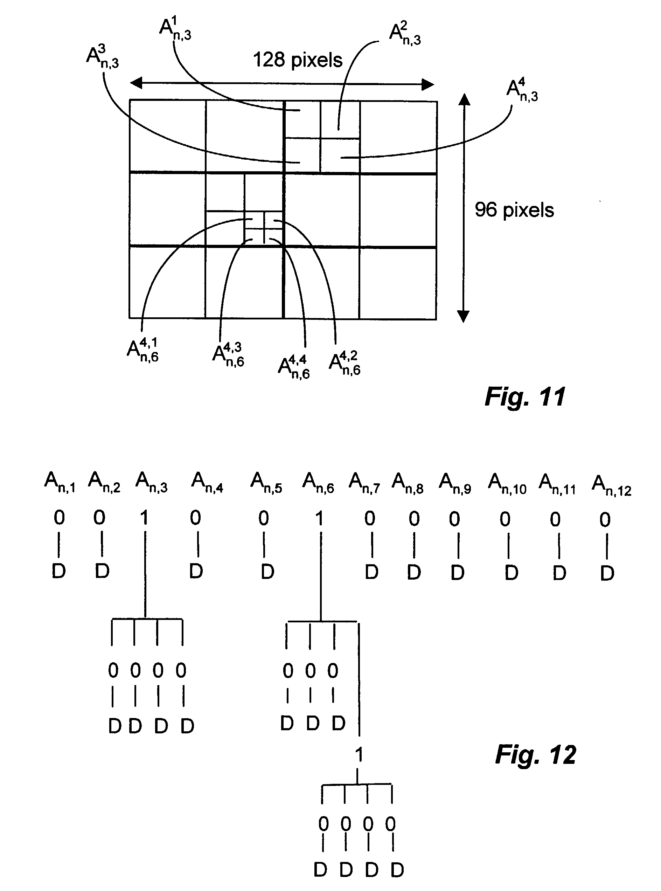

current image $f_n$ into blocks of initial size. For example, as depicted in Figure 11, the image $f_n$ has a size of 128 x 96 pixels and is divided into twelve blocks of size 32 x 32 pixels.

Each block of initial size $A_{n,1}$ to $A_{n,12}$ is associated with a root of the quaternary tree depicted in Figure 12, that is to say with a node of the tree which does not have any associated data and which has not yet been subdivided. A marker is initialised to the value zero for each root.

Step E42 is followed by step E43, which is a test on the value of the parameter n. If the parameter n is equal to 1, step E43 is followed by step E48, which will be described hereinafter. In fact, the first image of the sequence is coded by a multilinear approximation.

If at step E43 the parameter n is greater than 1, step E43 is followed by step E44. The latter is the division of a reference image into blocks of adjacent pixels, stored in memory 25. As before, the size of the blocks of the reference image depends on the size of the blocks to be coded $A_{n,m}$.

The following step E45 is the coding of the current block to be coded $A_{n,m}$ by block matching: in the reference image $g_{n-1}$, a matching block $D_{n-1,m,j}$ is sought which is as similar as possible to the block to be coded, according to a predetermined criterion, for example a measurement of distance $d(A_{n,m}, D_{n-1,m,j})$ between the block to be coded and the matching block.

The following step E46 is a test for checking whether the matching criterion is below a predetermined threshold. If the response is positive, the relative position of the matching block $D_{n-1,m,j}$, in the reference image $g_{n-1}$, with respect to the position of the block to be coded $A_{n,m}$, in the image currently being coded $f_n$, that is to say the movement vector $V_{n,m,j}$, is stored in memory 25, at step E47. An indicator $I_{n,m}$ is also stored, to indicate that the block under consideration is coded by block matching. This indicator is for example an additional bit set to the value 1. The movement vector $V_{n,m,j}$ and the indicator $I_{n,m}$ represent the coding information of the block $A_{n,m}$. Step E47 is followed by step E51, which will be described hereinafter.

If the response is negative at step E46, this means that the coding by block matching does not give a satisfactory result, for the block under consideration. Step E46 is then followed by step E48.

Step E48 is the seeking of a transformation between the block $A_{n,m}$ of the image to be coded $f_n$ and the source blocks. Step E48 is similar to steps E9 to E10 previously detailed with reference to Figure 5.

Step E48 results in a transformation $T_{n,m}$ determined for the block to be coded $A_{n,m}$. The different variants possible for selecting the source blocks, for choosing the transformation and distance, previously disclosed, are here applicable in the same way as for the first embodiment.

The following step E49 is a test for determining whether the distance $d(A_{n,m}, AR_{n,m})$ calculated at the previous step is below a predetermined threshold S.

If the response is positive, this means that the calculated approximation makes it possible to reconstruct a block $AR_{n,m}$ sufficiently close to the block to be coded $A_{n,m}$; step E49 is followed by step E50, at which the transformation $T_{n,m}$ is stored as a data block D associated with the node of the block $A_{n,m}$, in the quaternary tree of the image $f_n$. The marker remains at the value zero. At the following step E51 the reconstructed block $AR_{n,m}$ is calculated and stored to memory in order to construct the image $g_n$.

Step E51 is followed by step E52, at which a test is carried out to determine whether the block which has just been processed is the last of the image currently being coded. If this is not the case, step E52 is followed by step E53 for considering another block of the image $f_n$. Step E53 is followed by the previously described step E45. When all the blocks of the image $f_n$ have been coded, step E52 is followed by step E54, at which a test is carried out to determine whether all the images of the sequence have been processed. If there remains at least one image to be coded, step E54 is followed by step E55 for considering another image of the sequence. Step E55 is followed by step E42.

If, at step E49, the distance $d(A_{n,m}, AR_{n,m})$ calculated at the previous step E48 is above the threshold S, step E49 is followed by step E56, at which a test is carried out to determine whether the size of the current block to be coded $A_{n,m}$ has reached a predetermined minimum value. If the response is positive, step E56 is followed by step E50, that is to say the transformation determined is stored to memory, even if it does not meet the criterion of step E49, where the size of the current block to be coded $A_{n,m}$ has reached the minimum value. In a variant, when the response is positive at step E56, the current block $A_{n,m}$ is coded by the mean value of its coefficients, which requires fewer bits for storing the coded form of the block.

If the response to the test of step E56 is negative, this step is followed by step E57, at which the current block to be coded $A_{n,m}$ is divided into a predetermined number M1 of sub-blocks $A^1_{n,m}$ to $A^{M1}_{n,m}$. As depicted in **Figure 11**, the division is for example carried out into four sub-blocks. In the quaternary tree, the marker of the node associated with the divided block $A_{n,m}$ is set to the value 1, in order to indicate that the corresponding block has been divided. The division of the block results in four sub-blocks, whose nodes in the quaternary tree have markers initialised to zero. The order of the sub-blocks in the quaternary tree corresponds to their position in the divided block, and this order is the same for all the divided blocks: for example, top left sub-block, top right sub-block, bottom left sub-block and bottom right sub-block. The position information for the sub-blocks is used on decoding.

Step E57 is followed by the step E43 of testing the value of the parameter n. If the parameter n is equal to 1 (the case of the first image of the sequence), step E43 is followed by step E48. If the parameter n is greater than 1, step E43 is followed by the step E44 of dividing the image $g_{n-1}$ into blocks, and then by matching, for each of the sub-blocks determined at step E57. Each of these sub-blocks is coded in the same way as a block $A_{n,m}$. The following steps are run through successively for each sub-block $A^1_{n,m}$ to $A^{M1}_{n,m}$, which leads notably to the determination of a transformation for a current sub-block, and to its storage to memory if the criterion of step E49 is satisfied, or if the minimum sub-block size is reached (step E56). The size of the reference blocks is always adapted to that of the blocks to be coded, the reference blocks of the previous step E44 will consequently be divided into four sub-blocks.

For each sub-block, if the criterion of step E49 is not met, and if the minimum size of the sub-block is not reached (step E56), the sub-block under consideration is itself divided at step E57 into sub-blocks of smaller size.

Thus, for example, in Figure 11, the image $f_n$ is divided into twelve blocks $A_{n,1}$ to $A_{n,2}$, the blocks $A_{n,3}$ and $A_{n,6}$ are divided into four sub-blocks, and one of these sub-blocks $A^4_{n,6}$ is divided into four sub-blocks $A^{4,1}_{n,6}$, $A^{4,2}_{n,6}$, $A^{4,3}_{n,6}$ and $A^{4,4}_{n,6}$.

As already stated, the coding of an image $f_n$ of the sequence results in a compressed image $h_n$ having a set of movement vectors, transformations $T_{n,m}$ and a quaternary tree.

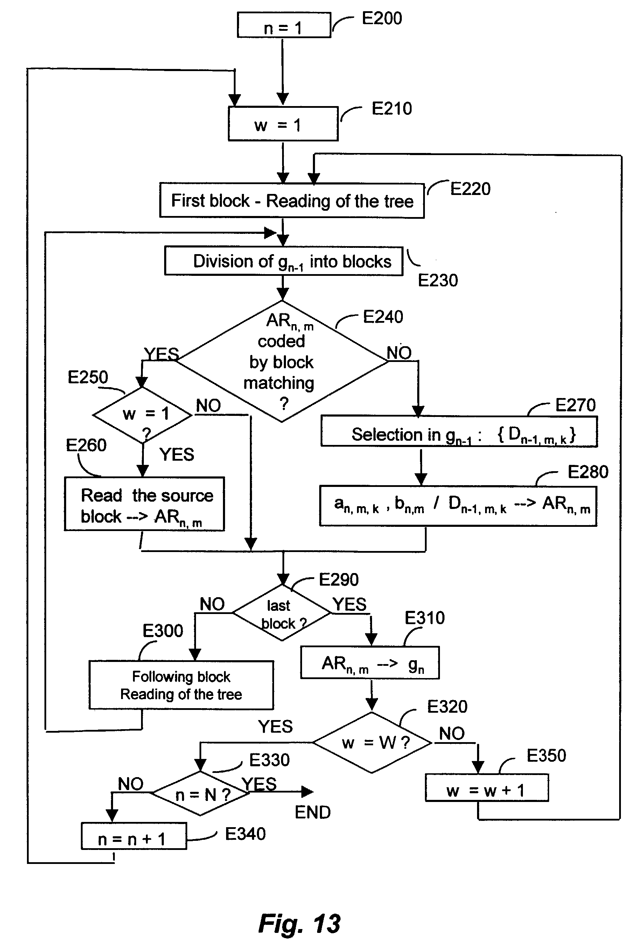

The decoding algorithm corresponding to this embodiment is depicted in **Figure 13** and includes steps E200 to E350 respectively similar to steps E20 to E35 of the algorithm described with reference to Figure 9 with the following changes:

-   the steps E220 to E300 of selecting the first block to be reconstructed $AR_{n,m}$ and the following block, respectively, include the reading of the quaternary tree associated with the image, notably for determining the size and position of the block to be reconstructed,
-   step E300 is followed by the step E230 of dividing the reference image.

These changes are necessary for taking account of the size and position of the blocks at the time of decoding; notably, the size and position of the source blocks depend on those of the block to be reconstructed.

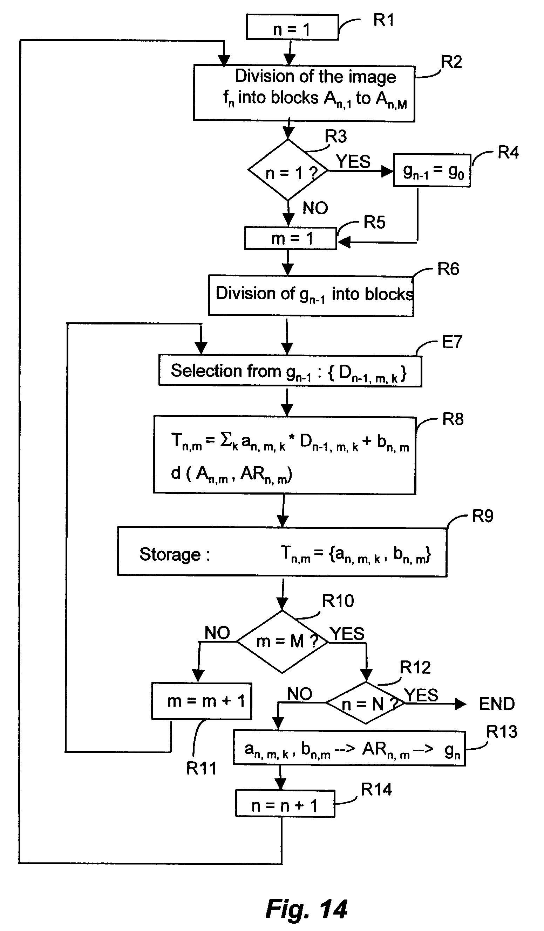

**Figure 14** depicts a third embodiment of the algorithm for coding the sequence of images $f_1$ to $f_N$.

The algorithm depicted in Figure 14 includes steps R1 to R14 which perform the coding of the sequence of digital images. The processing is performed image by image. Overall, an image in the sequence is coded according to a source image.

Step R1 is an initialisation at which the parameter n is initialised to 1, so as to consider first of all the first image in the sequence.

The following step R2 is a division of the image under consideration $f_n$ into a predetermined number M of blocks $A_{n,1}$ to $A_{n,M}$ of adjacent pixels. The number M of blocks can be predetermined, or can be a parameter set by the user of the algorithm. In this embodiment, the blocks $A_{n,1}$ to $A_{n,M}$ are adjacent, without overlap. In a variant which is not shown, the blocks can overlap, in order to limit the block effects on decoding, to the detriment of the compression ratio.

According to a first variant of this embodiment, depicted in **Figure 6**, the blocks all have the same predetermined size, and are for example square blocks of 32 x 32 pixels in the case of the image with 128 x 96 pixels. Division of the image is uniform throughout the image. According to a second variant depicted in **Figure 7**, the size of the blocks, whilst being predetermined, depends on the location of the blocks in the image: in a given area of the image, for example a central area liable to contain more details, the blocks are smaller than at the edges of the image. This given area will then be coded more finely than the rest of the image. This variant is particularly interesting for video-telephony since, in this case, the images mainly reproduce the faces of the users, which are generally situated at the centre of the images.

Two different sizes of block are depicted in Figure 7: 32 x 32 and 16 x 16 pixels. However, a higher number of sizes can be envisaged for specific applications, notably if it is known that the quantity of information varies a great deal from one area to the other of the images to be coded.

In all cases, division of the image results in a set of M blocks $A_{n,1}$ to $A_{n,M}$ stored in memory 25. The blocks $A_{n,1}$ to $A_{n,M}$ will be compressed, or coded, one after the other, in any order. This order is preferably predetermined and is then the order in which the blocks will then be decompressed, or decoded, which makes it unnecessary to mark the blocks with an index or by coordinates. In a variant, it is possible to mark the blocks and to associate the marking, index or coordinates, with the coded block, which makes it possible to decompress the blocks in any order, which can be different from the order used on compression.

Step R2 is followed by step R3, which is a test on the value of the parameter n. If the parameter n is equal to 1, step R3 is followed by step R4, at which a supplementary image $g_0$ is added to the sequence as a source image for the first image $f_1$ of the sequence. The supplementary image $g_0$ is any image, for example a uniformly grey image, and has the same size as the other images in the sequence.

If at step R3 the parameter n is greater than 1, step R3 is followed by step R5, as step R4 is followed by step R5. The latter is an initialisation of a parameter m to 1, in order to consider the first block $A_{n,1}$ in the image $f_n$.

The following step R6 is the division of one or more source images into blocks of adjacent pixels, stored in memory 25. The size of the blocks depends on the size of the blocks to be coded $A_{n,m}$. Preferably, the blocks of the source images are $F^2$ times larger than the blocks to be coded, where F is an integer equal for example to 2, which makes it possible to use a large amount of detail in the source image. The blocks of the reference images are then sub-sampled by the factor F, in order to work on blocks having the same number of pixels as the blocks to be coded. According to a variant which is simpler to implement, the blocks of the source images have the same size as the blocks to be coded.

Step R6 is followed by step R7, which is the selection of source blocks $D_{n-1,m,1}$ to $D_{n-1,m,K}$ from one or more source images relative to the block to be coded $A_n$,m of the image $f_n$, according to one of the following variants:

- the source blocks are selected from a source image which precedes the image being coded;
- the source blocks are selected from several source images which precede the image being coded;
- the source blocks are selected from a source image which precedes, and from a source image which follows, the image being coded;
- the source blocks are selected from several source images which precede, and/or from several source images which follow, the image being coded.

In each of the above variants, the source image or images are images in the sequence, or are images in the sequence which have been coded and then decoded according to the invention. The latter case makes it possible to restore the image better at the time of decoding, which will be disclosed hereinafter. This is because only the decoded images will be available at the time of decoding; it is therefore preferable to use also decoded images as source images for the coding in order not to introduce error.

According to a preferred embodiment of the invention which is more particularly taken into account here, a single source image $g_{n-1}$ is considered, which is the image preceding the image $f_n$ previously coded and then decoded according to the invention.

The number K of source blocks is predetermined, and is equal for example to 4. In a variant, the number K is a parameter for adjusting the algorithm. The source blocks are selected by their location in the source image $g_{n-1}$ according to the location of the block to be coded $A_{n,m}$ in the image $f_n$. In general terms, the source blocks are selected in a region of the preceding image which depends on the region of the block to be coded in the image under consideration. The two regions are preferably similar, that is to say the superimposition of the image under consideration and the source image leads to the partial covering of the source blocks by the block to be coded.

In a variant it is possible to select the source blocks from a region which is "translated" with respect to the region of the block to be coded. This variant is of interest where it is known that the image to be coded represents a scene translated with respect to the source image.

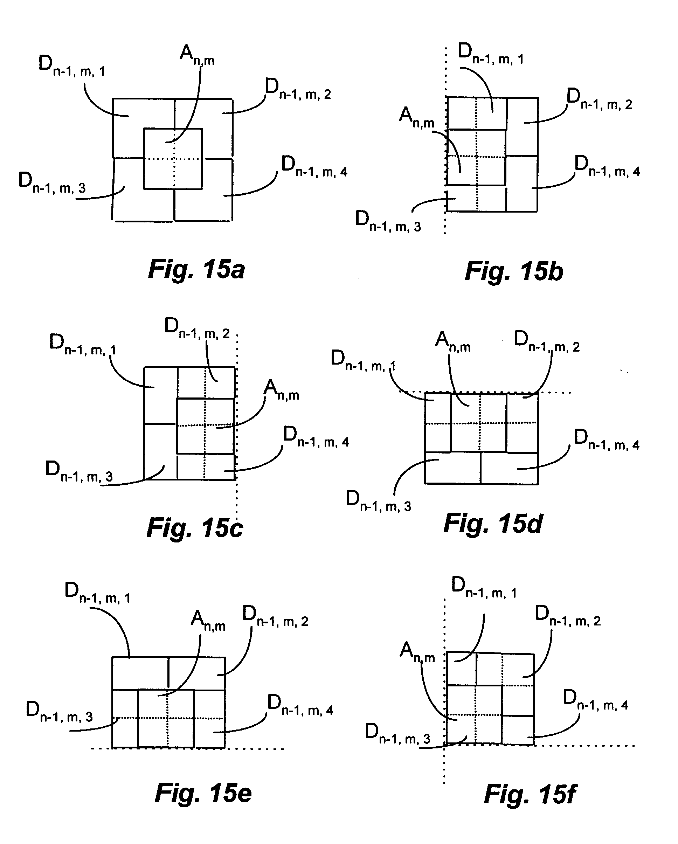

**Figures 15a to 15f** depict difference examples of source block selection. In each of Figures 15a to 15f, the block to be coded $A_{n,m}$ of the image under consideration $f_n$ has been superimposed on the source blocks $D_{n-1,m,1}$ to $D_{n-1,m,4}$ of the source image $g_{n-1}$. In the six examples, four source blocks of the same size as the block to be coded $A_{n,m}$ are considered.

In Figure 15a, the block to be coded $A_{n,m}$ is in a central part of the image $f_n$; the four source blocks are adjacent and the block to be coded is roughly centred on the four selected source blocks.

In Figures 15b to 15e, the block to be coded $A_{n,m}$ is situated on an edge of the image represented by a dotted line. Two of the source blocks partially overlap the other two source blocks, so that the block to be coded overlaps part of each of the source blocks.

In Figure 15f, the block to be coded $A_{n,m}$ is in a corner of the image, and the four source blocks overlap partially, so that the block to be coded overlaps part of each of the source blocks.

In a variant, when the block to be coded is on an edge or in a corner of the image, the four source blocks are adjacent, and two or three of the source blocks are truncated and supplemented either by a uniformly grey supplement, or by a supplement determined by extension of the image, for example by symmetry or by periodisation of the image.

Step R7 is followed by step R8, at which a transformation between the source blocks and the block to be coded is calculated.

According to a preferred embodiment, the transformation is a multilinear approximation, of the form: $T_{n,m} = \{a_{n,m,k}, b_{n,m}\}$ making it possible to construct the block $AR_{n,m} = \Sigma_k ( a_{n,m,k} \times D_{n-1,m,k} ) + b_{n,m}$.

In this expression, $a_{n,m,k}$ is a scale function, here a constant function, or coefficient, for a given source block $D_{n-1,m,k}$ and with a norm less than unity, and $b_{n,m}$ is a shift function of the grey levels, here a constant function, or coefficient, for the block to be coded $A_{n,m}$. The function $a_{n,m,k}$ applies to each of the pixels of the block $D_{n-1,m,k}$, which amounts here to multiplying all the pixels by the coefficient $a_{n,m,k}$.

The functions, here the coefficients $A_{n,m,k}$ and $b_{n,m}$ are determined so as to minimise a distance d $(A_{n,m}, AR_{n,m})$ between the block to be coded $A_{n,m}$ and the reconstructed block $AR_{n,m}$ by applying the transformation $T_{n,m}$ to the source blocks according to the formula given above.

According to an embodiment which is simple to implement, the functions $a_{n,m,k}$ and $b_{n,m}$ are made discreet and a limited number of possible values for the coefficients $a_{n,m,k}$ is tested. For example, each coefficient $a_{n,m,k}$ can take two integer values, a positive value and the opposite value. All the combinations of coefficients $a_{n,m,k}$ are tested, and for each combination the coefficient $b_{n,m}$ is chosen so as to minimise the envisaged distance.

The distance is calculated between the grey levels of the block to be coded $A_{n,m}$ and the grey levels of the block $AR_{n,m}$ resulting from the application of the transformation to the source blocks $D_{n-1,m,1}$ to $D_{n-1,m,K}$.

The distance can be the absolute value of the sum of the differences, or the root mean square error, or again the absolute value of the greatest difference, calculated between the source block $A_{n,m}$ and the reconstructed block $AR_{n,m}$ by applying the transformation $T_{n,m}$ to the source blocks.

In a preferred embodiment of the invention, the distance is the root mean square error calculated between the grey levels of the block to be coded $A_{n,m}$ and the grey levels of the block $AR_{n,m}$ resulting from the application of the approximation to the source blocks $D_{n-1,m,1}$ to $D_{n-1,m,K}$.

The combination $T_{n,m} = \{a_{n,m,k}, b_{n,m}\}$ which minimises the distance is stored at step R9 in the memory 25 of the coding device 2 (Figure 3) as a compressed form of the block $A_{n,m}$. The set of transformations $T_{n,m}$ relating to the image $f_n$ forms a compressed image $h_n$.

According to other embodiments:

- the transformation combines a multilinear approximation calculated on the source blocks and geometric transformations, such as rotation, of the source blocks,
- the transformation is of polynomial form, for example second or third order, calculated on the values of the pixels of the source blocks. This type of transformation gives more precise results, whilst taking longer to calculate.

The following step R10 is a test for checking whether m is equal to M, that is to say whether the block which has just been coded is the last in the current image. If there remains at least one block to be coded in the image $f_n$, step R10 is followed by step R11, at which the parameter m is incremented by one unit, in order to consider the following block in the image $f_n$. Step R11 is followed by the previously described step R7.

When the block which has just been coded is the last of the current image, step R10 is followed by step R12, which is a test for checking whether the image $f_n$ which has just been compressed is the last in the sequence. If this is not the case, step R12 is followed by step R13, which is the construction of the decompressed image $g_n$. The application of each of the transformations $T_{n,m}$ previously determined to the source blocks reconstructs each of the blocks $AR_{n,m}$, which in their entirety form the decoded image $g_n$. The image $g_n$ is stored in memory 25 in order to be used for coding the following image $f_{n+1}$ (step R6).

Step R13 is followed by step R14 for incrementing the parameter n by one unit. Step R14 is followed by the previously described step R2. Where n=N, that is to say for the last image in the sequence, it is not necessary here to reconstruct the image $g_N$.

When the response at step R11 is positive, all the images $f_1$ to $f_N$ of the sequence have been compressed into compressed images $h_1$ to $h_N$.

According to another embodiment, not shown, the coding method is modified as follows.

In order to code an image in the sequence, a source image chosen as disclosed above is considered.

The source blocks are no longer selected for each of the blocks to be coded of the image; source blocks are selected from the source image, once and for all for the image to be coded, and are then used for coding all the blocks of the image to be coded. Coding is thus more rapid, since the selection of the source blocks takes place only once per image; the distortions introduced by the coding will however be greater than with the previously described embodiment.

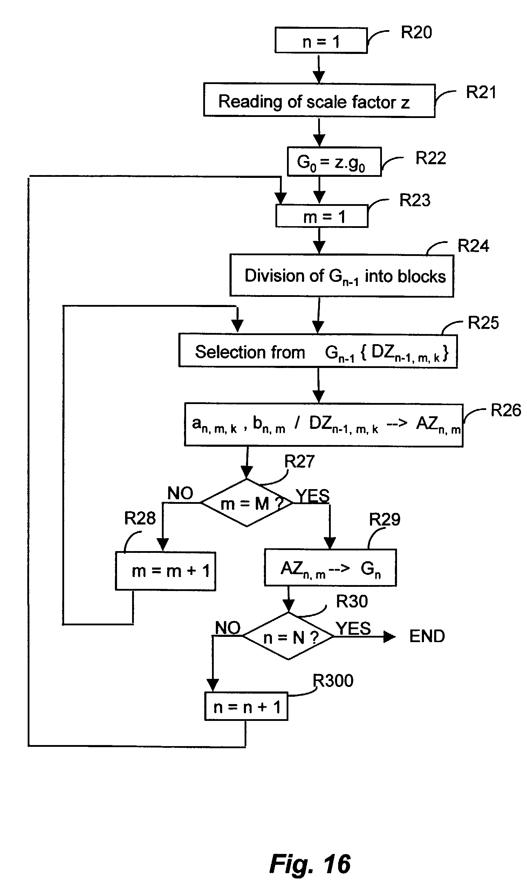

With reference to **Figure 16**, the third embodiment of an algorithm for decoding the compressed sequence of digital images includes steps R20 to R300. According to the invention, the decoding of the compressed sequence makes it possible to reconstruct the sequence not only at its original size, but also at a larger or smaller size. For this, the source images are replaced by reference images whose size is chosen so as to be that of the images of the reconstructed sequence. Consequently, the source blocks are replaced by secondary blocks, whose size is adapted to that of the images of the reconstructed sequence.

Step R20 is an initialisation at which the parameter n is initialised to 1, in order to process the first compressed image $h_1$ of the sequence.

At the following step R21, a scale factor z is read. The scale factor is for example selected by a user from amongst several possible choices. The scale factor is a number which is such that the size of any source block multiplied by the scale factor is an integer number. For example, if the source blocks are blocks of 32 x 32 pixels, it is possible to apply a scale factor of 3.5 in order to form, as will be seen, secondary blocks of 112 x 112 pixels, which will result in providing an image 3.5 times larger than the initially coded image. It is also possible to apply a scale factor of 0.25 in order to form secondary blocks of 8 x 8 pixels. The resulting image will then be four times smaller than the initial image.

At the following step R22, an additional image $g_0$ is added to the sequence and multiplied by the scale factor z, in order to form a reference image Go for the first compressed image $h_1$ of the sequence. The additional image $g_0$ is identical to that considered at the previously described step R4 and is for example a uniformly grey image. After multiplication by the scale factor z, the reference image has a number of pixels equal to the number of pixels in the initially coded image multiplied by the square of the scale factor.

The following step R23 is the initialisation of the parameter m to 1, in order to consider the first block to be reconstructed. The blocks are preferably processed in the same order as on compression, which avoids having to store and process an index, or coordinates, for referencing the blocks.

The following step R24 is the division of the reference image $G_{n-1}$ into adjacent pixel blocks, which are the secondary blocks stored in memory 55. Step R24 is similar to step R6.

The reference image $G_{n-1}$ corresponds to the source image $g_{n-1}$ and has a size multiplied by the scale factor z in the two horizontal and vertical directions, with respect to the source image. The reference image has as many secondary blocks as the source image has source blocks, and a second block of the reference image corresponds to a source block of the source image.

The following step R25 is the selection of secondary blocks $DZ_{n-1,m,1}$ to $DZ_{n-1,m,K}$ in the reference image $G_{n-1}$, relative to the block to be reconstructed $AZ_{n,m}$. According to the preferred embodiment, the reference image $G_{n-1}$ is the decoded image preceding the image $h_n$. The secondary blocks are selected like the source blocks at the time of coding (step R6), with the same possible variants.

Step R25 is followed by step R26, at which the transformation $T_{n,m}$ defined by the functions $a_{n,m,k}$ and $b_{n,m}$ is applied to the secondary blocks $DZ_{n-1,m,1}$ to $DZ_{n-1,m,K}$ selected at the previous step R25, according to the formula:

$$AZ_{n,m} = \Sigma_k \left( a_{n,m,k} \times DZ_{n-1,m,k} \right) + b_{n,m}.$$

Step R26 results in the decoded block $AZ_{n,m}$ stored in memory 55. The decoded block $AZ_{n,m}$ has a size multiplied by the scale factor z in the two horizontal and vertical directions, with respect to the block $A_{n,m}$, and consequently has a number of pixels multiplied by $z^2$ with respect to the number of pixels in the block $A_{n,m}$.

The following step R27 is a test for determining whether the block which has just been decompressed is the last of the image currently being decompressed. If this is not the case, step R27 is followed by step R28, at which the parameter m is incremented by one unit in order to consider the following block. Step R28 is followed by the previously described step R25.

When all the blocks of the current image have been decompressed, step R27 is followed by step R29, at which the decompressed image $G_n$ is reconstructed and for example displayed on a screen and/or stored to memory. In general terms, step R29 is the transfer of the image $G_n$ to the user means 6.

The following step R30 is a test for determining whether the image which has just been decompressed is the last image of the sequence. If there remains at least one image to be decompressed, step R30 is followed by step R300, at which the parameter n is incremented by one unit, in order to consider the following image In the sequence. Step R300 is followed by the previously described step R23.

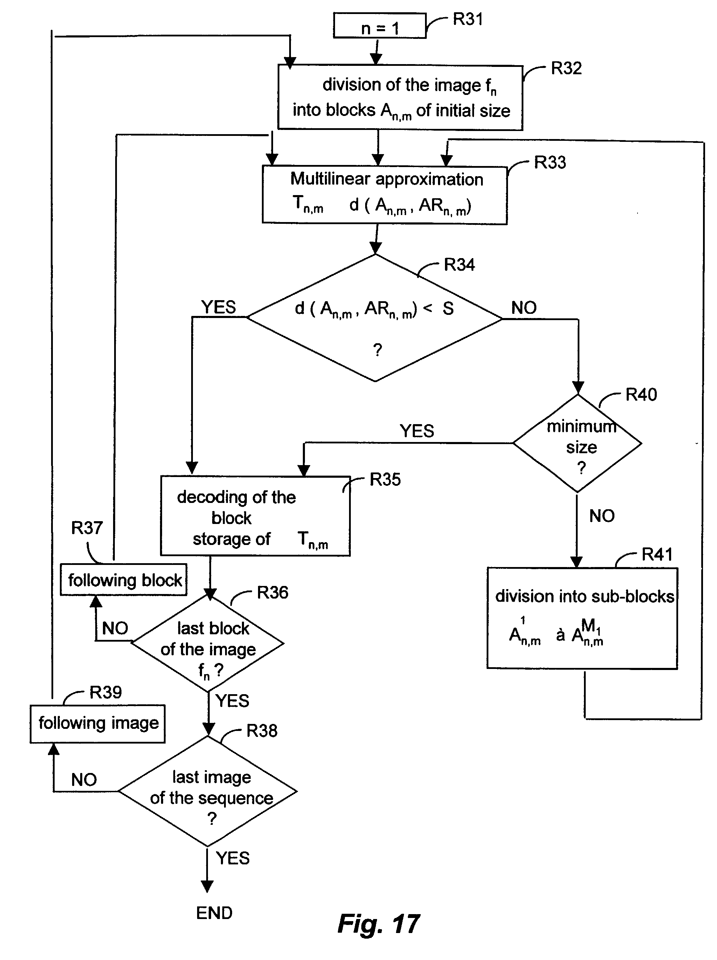

Another embodiment of a coding method is depicted in **Figures 17**, **11 and 12** in the form of an algorithm including steps R31 to R41 stored in memory 23 (Figure 3).

This embodiment also concerns a set of data which is a sequence of digital images.

In this embodiment, the size of the blocks to be coded is determined in an adaptive fashion, according to the quantity of information present in the blocks to be coded and according to the "movement" of the blocks to be coded with respect to the reference image, that is to say the changes between the pixels in the block to be coded and the pixels in the source blocks of the source image.

A division tree, here a quaternary tree, is associated with each image to be coded. The quaternary tree represents the particular division of each image. Each compressed image $h_n$ has a set of transformations $\{T_{n,m}\}$ and the associated quaternary tree.

Step R31 is an initialisation of a parameter n to 1, in order to consider first of all the first image $f_1$ of the sequence.

The following step R32 is the division of the current image $f_n$ into blocks of initial size. For example, as depicted in Figure 11, the image $f_n$ has a size of 128 x 96 pixels and is divided into twelve blocks of size 32 x 32 pixels.

Each block of initial size $A_{n,1}$ to $A_{n,12}$ is associated with a root of the quaternary tree depicted in Figure 12, that is to say with a node of the tree which does not have any associated data and which has not yet been subdivided. A marker is initialised to the value zero for each root.

The following step R33 is the seeking of a transformation between a block $A_{n,m}$ of the image to be coded $f_n$ and the source blocks. Step R33 is similar to steps R3 to R8 previously detailed with reference to Figure 14.

Step R33 results in a transformation $T_{n,m}$ determined for the block to be coded $A_{n,m}$. The different variants possible for selecting the source image and source blocks and for choosing the transformation and distance, previously disclosed, are here applicable in the same way as for the third embodiment.

The following step R34 is a test for determining whether the distance $d(A_{n,m}, AR_{n,m})$ calculated at the previous step is below a predetermined threshold S.

If the response is positive, this means that the calculated approximation makes it possible to reconstruct a block $AR_{n,m}$ sufficiently close to the block to be coded $A_{n,m}$; step R34 is followed by step R35, at which the transformation $T_{n,m}$ is stored as a data block D associated with the node of the block $A_{n,m}$, in the quaternary tree of the image $f_n$. The marker remains at the value zero. The reconstructed block $AR_{n,m}$ is calculated and stored to memory in order to construct the image $g_n$.

Step R35 is followed by step R36, at which a test is carried out to determine whether the block which has just been processed is the last of the image currently being coded. If this is not the case, step R36 is followed by step R37 for considering another block of the image $f_n$. Step R37 is followed by the previously described step R33. When all the blocks of the image $f_n$ have been coded, step R36 is followed by step R38, at which a test is carried out to determine whether all the images of the sequence have been processed. If there remains at least one image to be coded, step R38 is followed by step R39 for considering another image of the sequence. Step R39 is followed by step R32.

If, at step R34, the distance $d(A_{n,m}, AR_{n,m})$ calculated at the previous step R33 is above the threshold S, step R33 is followed by step R40, at which a test is carried out to determine whether the size of the current block to be coded $A_{n,m}$ have reached a predetermined minimum value. If the response is positive, step R40 is followed by step R35, that is to say the transformation determined is stored to memory, even if it does not meet the criterion of step R34, where the size of the current block to be coded $A_{n,m}$ has reached the minimum value. In a variant, when the response is positive at step R40, the current block $A_{n,m}$ is coded by the mean value of its coefficients, which requires fewer bits for storing the coded form of the block.

If the response to the test of step R40 is negative, this step is followed by step R41, at which the current block to be coded $A_{n,m}$ is divided into a predetermined number M1 of sub-blocks $A^1_{n,m}$ to $A^{M1}_{n,m}$. As depicted in **Figure 11**, the division is for example carried out into four sub-blocks. In the quaternary tree, the marker of the node associated with the divided block $A_{n,m}$ is set to the value 1, in order to indicate that the corresponding block has been divided. The division of the block results in four sub-blocks, whose nodes in the quaternary tree have markers initialised to zero. The order of the sub-blocks in the quaternary tree corresponds to their position in the divided block, and this order is the same for all the divided blocks: for example, bottom right sub-block, bottom left sub-block, top right sub-block, top left sub-block. The position information for the sub-blocks is used on decoding.

Step R41 is followed by the step R33 of calculating a transformation, for each of the sub-blocks determined at step R41. Each of these sub-blocks is coded in the same way as a block $A_{n,m}$. The following steps are run through successively for each sub-block $A^1_{n,m}$ to $A^{m1}_{n,m}$, which leads notably to the determination of a transformation for the current sub-block, and to its storage to memory if the criterion of step R34 is met, or if the minimum sub-block size is reached (step R40).

For each sub-block, if the criterion of step R34 is not met, and if the minimum size of the sub-block is not reached (step R40), the sub-block under consideration is itself divided at step R41 into sub-blocks of smaller size.

Thus, for example, in Figure 11, the image $f_n$

is divided into twelve blocks $A_{n,1}$ to $A_{n,12}$, the blocks $A_{n,3}$ and $A_{n,6}$ are divided into four sub-blocks, and one of these sub-blocks $A^4_{n,6}$ is divided into four sub-blocks $A^{4,1}_{n,6}$, $A^{4,2}_{n,6}$, $A^{4,3}_{n,6}$ and $A^{4,4}_{n,6}$.

As already stated, the coding of an image $f_n$ of the sequence results in a compressed image $h_n$ having a set of transformations $\{T_{n,m}\}$ associated with a quaternary tree.

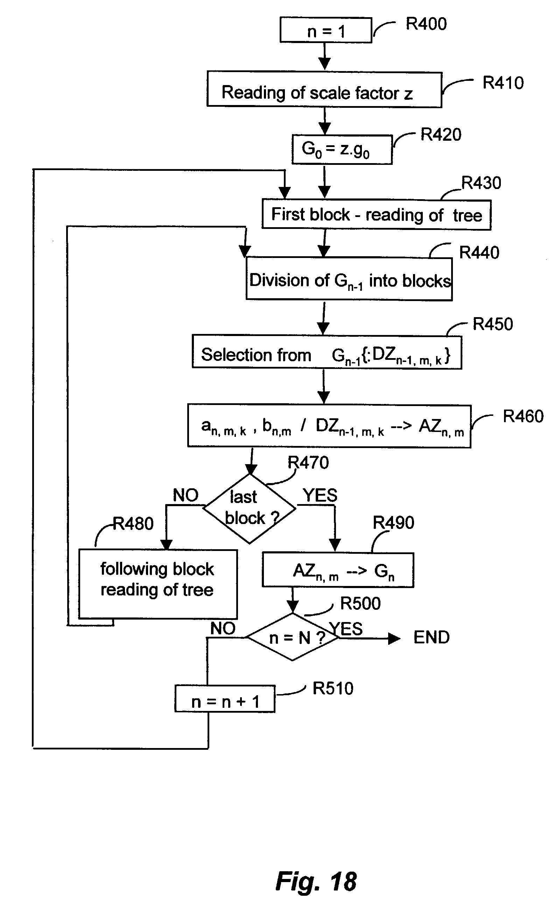

The decoding algorithm according to this embodiment of the invention is depicted in **Figure 18** and includes steps R400 to R510 respectively similar to steps R20 to R300 of the algorithm described with reference to Figure 16 with the following changes:

- the steps R430 and R480 of selecting the first block to be reconstructed $AZ_{n,m}$ and the following block, respectively, include the reading of the quaternary tree associated with the image, notably for determining the size and position of the block to be reconstructed,
- step R480 is followed by the step R440 of dividing the reference image.

These changes are necessary for taking account of the size and position of the blocks at the time of decoding; notably, the size and position of the source blocks depend on those of the block to be reconstructed.

In addition, the possible values of the scale factor z are here chosen so that the secondary blocks have an integer number of pixels, whatever the size of the source blocks.

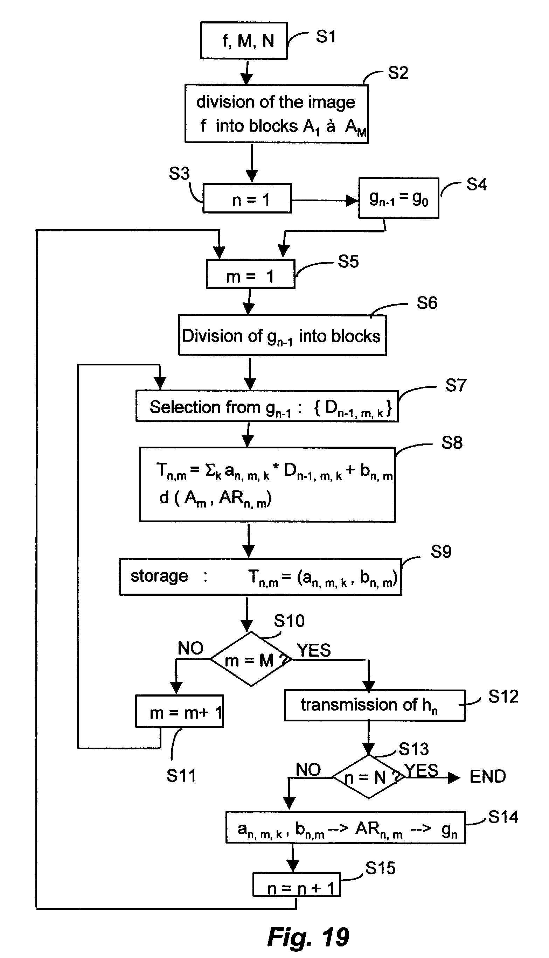

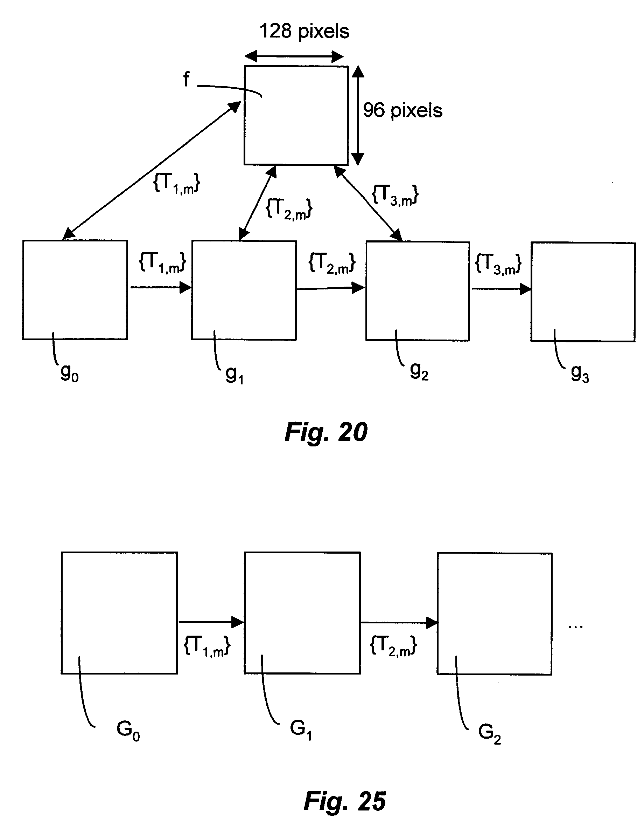

In **Figures 19 and 20**, consideration is now given to a set of data representing physical quantities which is a digital image f, here a grey-level image, having by way of example 128 x 96 pixels with 256 levels.

The numerical references of this embodiment are chosen so as to be as close as possible to that of the preceding embodiments.

The algorithm depicted in Figure 19 includes steps S1 to S15, which perform the coding of the digital image. Overall, as depicted in Figure 20, the image is coded progressively, using several coding iterations. The result of coding each iteration can be transmitted, so that the coded image is transmitted progressively, with a limited transmission rate.

Step S1 is an initialisation at which the source 1 supplies an image to be coded f to the coding device 2. An integer number M, explained hereinafter, is determined as a function of the size of the image. A coding iteration number N is also determined. The parameters M and N can be predetermined or set by a user.

The following step S2 is a division of the image under consideration f into the number M of blocks $A_1$ to $A_M$ of adjacent pixels. In this embodiment, the blocks $A_1$ to $A_M$ are adjacent, without overlap. In a variant which is not shown, the blocks can overlap, in order to limit the block effects on decoding, to the detriment of the compression ratio.

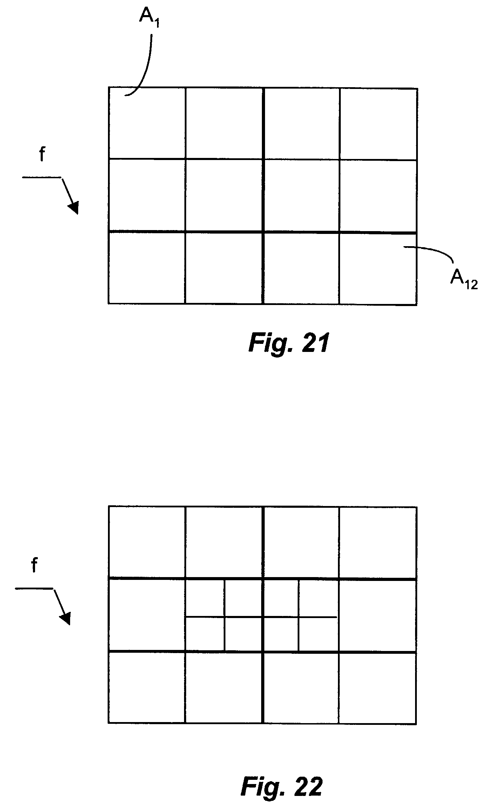

According to a first variant of this embodiment depicted in **Figure 21**, the blocks all have the same predetermined size, and are for example square blocks of 32 x 32 pixels in the case of the image with 128 x 96 pixels. The division of the image is uniform throughout the image. According to a second variant depicted in **Figure 22**, the size of the blocks, whilst being predetermined, depends on the position of the blocks in the image: in a given zone of the image, for example a central zone liable to contain more details, the blocks are smaller than at the edges of the image. This given zone will then be coded more finely than the rest of the image.

Two different sizes of block are depicted in Figure 22: 32 x 32 and 16 x 16 pixels. However, a higher number of sizes can be envisaged for specific applications, notably if it is known that the quantity of information varies a great deal from one zone to the other in the image to be coded.

In all cases, division of the image results in a set of M blocks $A_1$ to $A_M$, stored in memory 25. The blocks $A_1$ to $A_M$ will be compressed, or coded, one after the other, in any order. This order is preferably predetermined and is then the order in which the blocks will then be decompressed, or decoded, which makes it unnecessary to reference the blocks by means of an index or by coordinates. In a variant, it is possible to reference the blocks and to associate the referencing, index or coordinates, with the coded block, which makes it possible to decompress the blocks in any order, which can be different from the order used on compression.

Step S2 is followed by step S3, which is an initialisation of a parameter n to one, in order to commence the first coding iteration. Step S3 is followed by step S4, at which an additional image $g_0$ is considered as a source image for the first coding iteration. The additional image $g_0$ is any image, for example a uniformly grey image.**

Step S4 is followed by step S5, which is an initialisation of a parameter m to 1, in order to consider the first block $A_1$ in the image f.

The following step S6 is the division of a source image into blocks of adjacent pixels, stored in memory 25. The size of the blocks depends on the size of the blocks to be coded $A_m$. Preferably, the blocks of the source images are $F^2$ times larger than the blocks to be coded, where F is an integer for example equal to two, which makes it possible to use a great deal of detail in the source image. The blocks of the source images are then sub-sampled by the factor F, in order to work on blocks having the same number of pixels as the blocks to be coded. According to a variant which is simpler to implement, the blocks of the source images have the same size as the blocks to be coded. According to a preferred embodiment which is more particularly taken into account here, the source image $g_{n-1}$ is the image which is coded and then decoded during the iteration preceding the current coding iteration, except for the first iteration, for which the source image $g_0$ is predetermined.

mined.

Step S6 is followed by step S7, which is the selection of source blocks $D_{n-1,m,1}$ to $D_{n-1,m,K}$ in the source image relative to the block to be coded $A_m$ of the image f.

The number K of source blocks is predetermined, and is equal for example to 4. In a variant, the number K is a parameter for adjusting the algorithm. The source blocks are selected by their location in the source image $g_{n-1}$ as a function of the location of the block to be coded $A_m$ in the image f. In general terms, the source blocks are selected in a region of the source image which depends on the region of the block to be coded in the image under consideration. Preferably, the two regions are similar, that is to say the superimposition of the image under consideration and of the source image leads to the partial overlapping of the block to be coded and the source blocks.

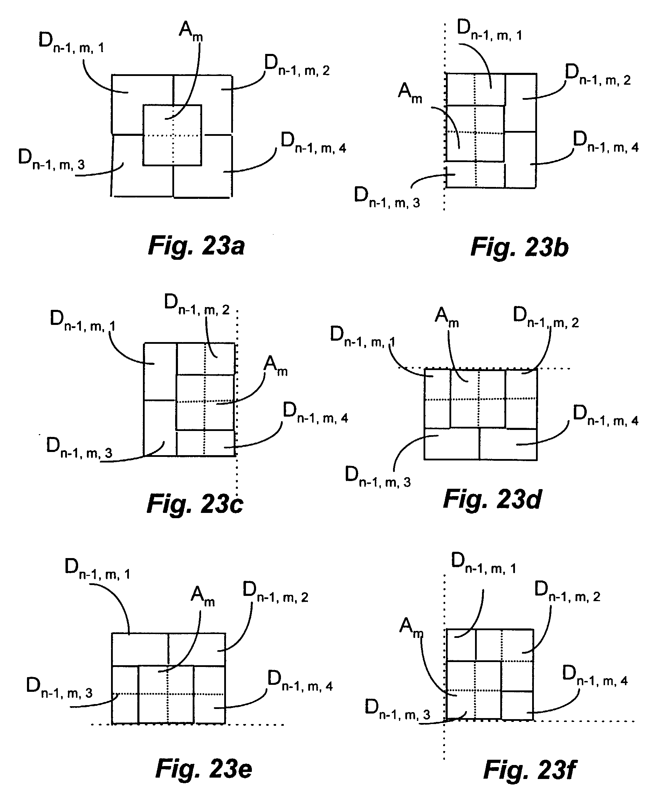

**Figures 23a to 23f** depict different examples of selecting source blocks. In each of Figures 23a to 23f, the block to be coded $A_m$ of the image under consideration f has been superimposed on the source blocks $D_{n-1,m,1}$ to $D_{n-1,m,4}$ of the source image $g_{n-1}$. In the six examples, four source blocks of the same size as the block to be coded $A_m$ are considered.

In Figure 23a, the block to be coded $A_m$ is in a central part of the image f: the four source blocks are adjacent and the block to be coded is preferably centred on the set of four selected source blocks.

In Figures 23b to 23e, the block to be coded $A_m$ is situated at one edge of the image represented by a dotted line. Two of the source blocks partially overlap the other two source blocks, so that the block to be coded overlaps part of each of the source blocks.

In Figure 23f, the block to be coded $A_m$ is in a corner of the image, and the four source blocks partially overlap, so that the block to be coded overlaps part of each of the source blocks.

In a variant, when the block to be coded is at one edge or in a corner of the image, the four source blocks are adjacent, and two or three of the source blocks are truncated and supplemented either by a uniformly grey addition or by an addition determined by extending the image, for example by symmetry or by periodisation of the image.

Step S7 is followed by step S8, at which a transformation between the source blocks and the block to be coded is calculated.

According to a preferred embodiment, the transformation is a multilinear approximation of the form: $T_{n,m} = \{a_{n,m,k}, b_{n,m}\}$ making it possible to construct the block $AR_{n,m} = \Sigma_k (a_{n,m,k} \times D_{n-1,m,k}) + b_{n,m}$.

In this expression, $a_{n,m,k}$ is a scale function, here a constant function, or coefficient, for a given source block $D_{n-1,m,k}$ and with a norm lower than unity, and $b_{n,m}$ is a grey level shift function, here a constant function, or coefficient, for the block to be coded $A_m$ at the iteration n. The function $a_{n,m,k}$ applies to each of the pixels in the block $D_{n-1,m,k}$, which amounts here to multiplying all the coefficients by the coefficient $a_{n,m,k}$.

The functions, here the coefficients, $a_{n,m,k}$ and $b_{n,m}$ are determined so as to minimise a distance $d(A_m, AR_{n,m})$ between the block to be coded $A_m$ and the reconstructed block $AR_{n,m}$ at iteration n by applying the transformation $T_{n,m}$ to the source blocks using the formula given above.

According to an embodiment which is simple to implement, the functions $a_{n,m,k}$ and $b_{n,m}$ are made discreet and a limited number of possible values for the coefficients $a_{n,m,k}$ are tested. For example, each coefficient $a_{n,m,k}$ can take two integer values, a positive value and the opposite value. All the combinations of coefficients $a_{n,m,k}$ are tested, and for each combination the coefficient $b_{n,m}$ is chosen so as to minimise the distance envisaged.

The distance is calculated between the grey levels of the block to be coded $A_m$ and the grey levels of the block $AR_{n,m}$ resulting from the application of the approximation to the source blocks $D_{n-1,m,1}$ to $D_{n-1,m,K}$.

The distance can be the absolute value of the sum of the differences, or the root mean square error, or again the absolute value of the greatest distance, calculated between the source block $A_m$ and the reconstructed block by applying the transformation $T_{n,m}$ to the source blocks.

In a preferred embodiment, the distance is the root mean square error calculated between the grey levels of the block to be coded $A_m$ and the grey levels of the block $AR_{n,m}$ resulting from the application of the transformation to the source blocks $D_{n-1,m,1}$ to $D_{n-1,m,K}$.

The combination $T_{n,m} = \{a_{n,m,k}, b_{n,m}\}$ which minimises the distance is stored at step S9 in the memory 25 of the coding device 2 (Figure 3) as a compressed form of the block $A_m$. The set of compressed blocks $\{T_{n,m}\}$ relating to the image f and determined at iteration n forms a compressed image $h_n$.

According to other embodiments:

- the transformation combines a multilinear approximation calculated on the source blocks and geometric transformations, such as rotation, of the source blocks,
- the transformation is of polynomial form, for example of second or third order, calculated on the values of the pixels of the source blocks. This type of transformation gives more precise results, whilst taking longer to calculate.

The following step S10 is a test for checking whether m is equal to M, that is to say whether the block which has just been coded is the last of the image f. If there remains at least one block to be coded in the image f, step S10 is followed by step S11, at which the parameter m is incremented by one unit, in order to consider the following block in the image f. Step S11 is followed by the previously described step S7.

When the block which has just been coded is the last of the image f, step S10 is followed by step S12, which is the transmission of the compressed image $h_n$. This transmission is a step in the progressive transmission of the coded image and will enable the decoding device to decode an approximation of the image, as disclosed below.

The following step S13 is a test for checking whether all the coding iterations of the image f have been performed. If this is not the case, step S13 is followed by step S14, which is the construction of the decompressed image $g_n$. The application of each of the previously determined transformations $T_{n,m}$ to the source blocks reconstructs each of the blocks $AR_{n,m}$, which as a whole form the decoded image $g_n$. The image $g_n$ is stored in memory 25 in order to be used as a reference image at the following iteration $n + 1$.

Step S14 is followed by step S15 for incrementing the parameter n by one unit. Step S15 is followed by the previously described step S5. Where n = N, that is to say for the last coding iteration of the image f, it is not necessary here to reconstruct the image $g_N$.

When the response to step S13 is positive, all the coding iterations of the image f have been performed.

According to another embodiment, not depicted, the coding method is modified as follows.

In order to code the image, a source image, chosen as disclosed above, is considered at each iteration.

The source blocks are no longer selected for each of the image blocks to be coded; source blocks are selected in the source image, once and for all for each iteration, and are then used for coding all the blocks of the image to be coded. Coding is thus more rapid, since the source blocks are selected only once per iteration; the distortions introduced by the coding will however by greater than with the previously described embodiment.

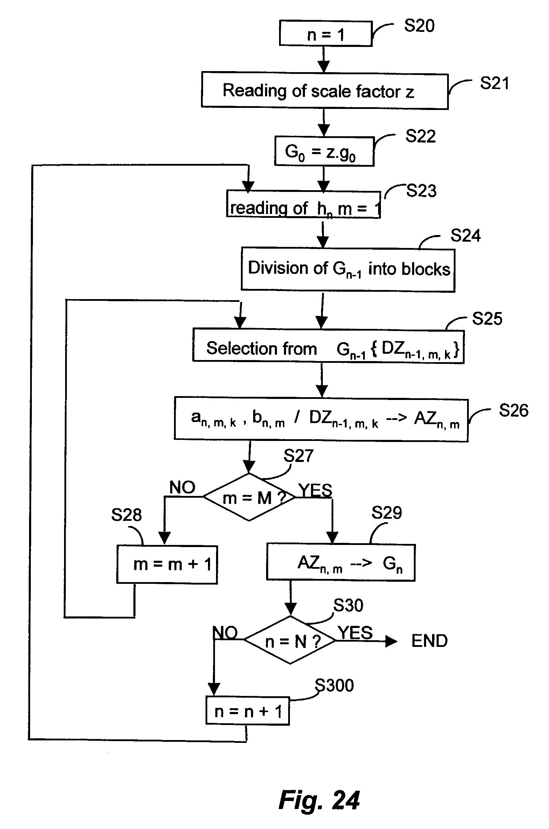

With reference to **Figures 24 and 25**, the embodiment of a progressive compressed digital image decoding algorithm includes steps S20 to S300. According to the invention, the progressive compressed digital image decoding makes it possible to reconstruct the image not only at its original size, but also at a larger or smaller size. To this end, the source images are replaced by reference images whose size is chosen so as to be that of the reconstructed image. Consequently the source blocks are replaced by secondary blocks whose size is adapted to that of the images of the reconstructed sequence.

Step S20 is an initialisation at which the parameter n is initialised at 1, for the first decoding iteration.

At the following step S21, a scale factor z is read. The scale factor is for example selected by a user from amongst several possible choices. The scale factor is a number which is such that the size of any source block multiplied by the scale factor is an integer number.

For example, if the source blocks are blocks of 32 x 32 pixels, it is possible to apply a scale factor of 3.5 in order to form, as will be seen, secondary blocks of 112 x 112 pixels, which will result in providing an image 3.5 times larger than the initially coded image. It is also possible to apply a scale factor of 0.25 in order to form secondary blocks of 8 x 8 pixels. The resulting image will then be four times smaller than the initial image.

At the following step S22, an additional image $g_0$ is considered and multiplied by the scale factor z, in order to form a reference image Go for the first decoding iteration. The additional image $g_0$ is identical to that considered at the previously described step S4, and is for a example a uniformly grey image. After multiplication by the scale factor z, the reference image has a number of pixels equal to the number of pixels of the initially coded image, multiplied by the square of the scale factor.

From the following step S23, the compressed form $h_n$ of the image is considered. Step S23 is the reading of the compressed form $h_n$, and the initialisation of the parameter m to 1, in order to consider the first block to be reconstructed. The blocks are preferably processed in the same order as on compression, which avoids having to store and process an index, or coordinates, in order to reference the blocks.

The following step S24 is the division of the reference image $G_{n-1}$ into blocks of adjacent pixels, which are the secondary blocks stored in memory 55. Step S24 is similar to step S6.

The reference image $G_{n-1}$ corresponds to the source image $g_{n-1}$ and has a size multiplied by the scale factor z in the two horizontal and vertical directions, with respect to the source image. The reference image has as many secondary blocks as the source image has source blocks, and a secondary block of the reference image corresponds to a source block of the source image.

The following step S25 is the selection of secondary blocks $DZ_{n-1, m,1}$ to $DZ_{n-1,m,K}$ in the reference image $G_{n-1}$, relative to the block to be reconstructed $AZ_{n,m}$ of the image to be decompressed $h_n$. The reference image is selected as the source image at the time of coding. According to the preferred embodiment, the reference image $G_{n-1}$ is the decoded image preceding the image $h_n$. The secondary blocks are selected in the same way as for coding, with the same variants possible.

Step S25 is followed by step S26, at which the transformation $T_{n,m}$ defined by the parameters $a_{n,m,k}$ and $b_{n,m}$ is applied to the source blocks $DZ_{n-1, m,1}$ to $DZ_{n-1,m,K}$ selected at the previous step S25, according to the formula:

$$AZ_{n,m} = \Sigma_k (a_{,n,m,k} \times DZ_{n-1,m,k}) + b_{n,m}.$$

Step E25 results in the decompressed block $AZ_{n,m}$ stored in memory 55.

The following step S27 is a test for determining whether the block which has just been decompressed is the last of the image currently being decompressed. If this is not the case, step S27 is followed by step S28, at which the parameter m is incremented by one unit in order to consider the following block. Step S28 is followed by the previously described step S25.

When all the blocks of the current image have been decompressed, step S27 is followed by step S29, at which the decompressed image $G_n$ is reconstructed and for example displayed on a screen, and/or stored to memory. In general terms, step S29 is the transfer of the image $G_n$ to the user means 6.

The following step S30 is a test for determining whether all the iterations have been performed. If there remains at least one iteration to perform, step S30 is followed by step S300, at which the parameter n is incremented by one unit, in order to pass to the following iteration. Step S300 is followed by the previously described step S23.

Thus the image $G_1$ is first of all reconstructed, then the image $G_2$, and so on, as depicted in Figure 11, which affords a progressive construction of the decoded image, each iteration making it possible to obtain an image including more details than at the previous iteration.

The invention has been described for grey-level images, that is to say images with a single component; it also applies to colour images conventionally having three components.

These components are conventionally the red, green and blue components, or the luminance and chrominance components. Each of these components is processed as disclosed for an image with a single component.

Naturally, the present invention is in no way limited to the embodiments described and depicted, but, quite the contrary, encompasses any variant within the capability of a person skilled in the art.

**Claims**

1. Method of coding a set of data representing physical quantities, said set being composed of sub-sets ($f_n$),

    characterised in that it includes, for each of the sub-sets, the steps of:

    - division (E2) of the sub-set into blocks of data to be coded ($A_{n,m}$), and into source blocks ($D_{n,m,1}$, $D_{n,m,K}$),

        then, for each of the blocks of data to be coded ($A_{n,m}$), the steps of:

    - selection (E9) of a predetermined number of source blocks ($D_{n,m,1}$, $D_{n,m,K}$) in said sub-set,

    - determination (E10) of a transformation

$(T_{n,m})$ between the selected source blocks and the block to be coded.

2. Method of coding a set of data representing physical quantities, said set being composed of sub-sets $(f_n)$,

characterised in that it includes, for each of the sub-sets, the steps of:

- division (E2) of the sub-set into blocks of data to be coded $(A_{n,m})$ and into source blocks $(D_{n,m,1}, D_{n,m,K})$,
- division (E4) of at least one reference sub-set $(g_{n-1})$ into reference blocks $(D_{n-1,m,j})$,

then, for each of the blocks of data to be coded, the steps of:

- estimation of the movement (E6) of the block to be coded with respect to one of the reference blocks and, if an estimation criterion is not satisfied (E7),
- selection (E9) of a predetermined number of source blocks $(D_{n,m,1}, D_{n,m,K})$ in said sub-set,
- determination (E10) of a transformation $(T_{n,m})$ between the source blocks selected and the block to be coded.

3. Coding method according to Claim 2, characterised in that the movement estimation is a block matching.

4. Coding method according to Claim 2 or 3, characterised in that the estimation criterion of the movement estimation step includes a measurement of a first distance between the block to be coded $(A_{n,m})$ and the reference block $(D_{n-1,m,j})$.

5. Coding method according to any one of Claims 2 to 4, characterised in that the first distance is the root mean square error calculated between the values of the block to be coded and the values of the reference block.

6. Coding method according to any one of Claims 2 to 5, characterised in that said at least one reference sub-set is a sub-set of the set.

7. Coding method according to any one of Claims 2 to 6, characterised in that said at least one reference sub-set is a sub-set $(g_{n-1})$ of the set, which was previously coded and then decoded.

8. Coding method according to any one of Claims 1 to 7, characterised in that the transformation minimises a second distance $(d(A_{n,m}, AR_{n,m}))$ between the block to be coded $(A_{n,m})$ and its approximation calculated by applying the transformation to the selected source blocks $(D_{n,m,1}, D_{n,m,K})$.

9. Coding method according to Claim 8, characterised in that the calculation of the second distance includes the calculation of a difference between the values of the data of the block to be coded $(A_{n,m})$ and the values of its approximation calculated by applying the transformation to the source blocks.

10. Coding method according to Claim 8, characterised in that the second distance is the root mean square error calculated between the values of the block to be coded $(A_{n,m})$ and the values of the block resulting from the application of the approximation to the source blocks $(D_{n,m,1}$ to $D_{n,m,K})$.

11. Coding method according to any one of Claims 1 to 10, characterised in that the transformation is a multilinear approximation.

12. Coding method according to any one of Claims 1 to 10, characterised in that the transformation is a multilinear approximation combined with a geometric transformation.

13. Coding method according to any one of Claims 1 to 10, characterised in that the transformation is a polynomial on the values of the coefficients of the source blocks.

14. Coding method according to any one of Claims 1 to 13, characterised in that the source blocks $(D_{n,m,1}, D_{n,m,K})$ are selected in a part of the sub-set which depends on the part in which the block to be coded $(A_{n,m})$ is situated in the sub-set currently being coded $(f_n)$.

15. Coding method according to any one of Claims 1 to 14, characterised in that the source blocks $(D_{n,m,1}, D_{n,m,K})$ have a size which is determined according to the size of the block to be coded $(A_{n,m})$.

16. Coding method according to any one of Claims 1 to 15, characterised in that the source blocks $(D_{n,m,1}, D_{n,m,K})$ have a size which is a multiple by a factor $F^2$ of that of the block to be coded $(A_{n,m})$ and are sub-sampled by the factor F, where F is an integer.

17. Coding method according to any one of Claims 1 to 15, characterised in that the source blocks $(D_{n,m,1}, D_{n,m,K})$ have the same size as the block to be coded $(A_{n,m})$.

18. Coding method according to any one of Claims 1 to 17, characterised in that the block to be coded $(A_{n,m})$ is of predetermined size.

19. Coding method according to any one of Claims 1 to 17, characterised in that the block to be coded ($A_{n,m}$) is of variable size, as a function of a size criterion.

20. Coding method according to Claim 19, characterised in that it includes the calculation (E48) of a third distance between the block to be coded and the approximation calculated by applying the transformation to the source blocks, in that the size criterion consists of comparing (E49) the third distance with a threshold, and in that, if the third distance is above a threshold, and if a minimum size of the block has not been reached, the block currently being coded is divided (E57) into blocks of smaller size.

21. Method of decoding a set of data representing physical quantities, the set being composed of sub-sets ($h_n$) which each include coded representations of blocks of data, each of the blocks being coded by means of a transformation ($T_{n,m}$) between the block and first source blocks formed in the sub-set,
    characterised in that it includes, for each of the blocks of each of the sub-sets to be decoded, the iterative application (E28) of the transformation to second source blocks in order to decode the block ($AR_{n,m}$), the second source blocks being formed in a sub-set containing blocks predetermined for the first iteration, and in a sub-set containing blocks decoded at the previous iteration for the following iterations.

22. Method of decoding a set of data representing physical quantities, the set being composed of sub-sets ($h_n$) which each include coded representations of data blocks,
    characterised in that it includes, for each of the blocks of each of the sub-sets to be decoded, the steps of:

    - seeking (E24) whether the block is coded by block movement estimation,
        and, in the case of a negative response, the block then being coded by means of a transformation ($T_{n,m}$) between the block and first source blocks formed in the sub-set:
    - iterative application (E28) of the transformation to second source blocks for decoding the block ($AR_{n,m}$), the second source blocks being formed in a sub-set containing blocks predetermined for the first iteration, and in a sub-set containing blocks decoded at the previous iteration for the following iterations.

23. Decoding method according to Claim 22, characterised in that, in the event of a positive response at the seeking step (E24), the block is decoded (E26) by copying a matching block determined by block movement estimation.

24. Method of decoding a coded set of data representing physical quantities, the set including sub-sets ($h_n$) which each include coded representations of blocks of data, each of the blocks being coded by means of a transformation ($T_{n,m}$) between the block and source blocks selected from at least one source sub-set,

    - characterised in that it includes, for each of the blocks of the first of the sub-sets to be decoded, the steps of:
    - forming (R22, R24, S22, S24) secondary blocks ($DZ_{n-1,m,k}$) including a number of coefficients which is proportional to that of the source blocks,
    - applying (R26, S26) the transformation to the secondary blocks in order to form a decoded block ($AZ_{n,m}$),

        so as to form a reference sub-set ($G_{n-1}$) including the decoded blocks,
        then, for each of the blocks of each of the other sub-sets to be decoded, the step of:

    - selecting (R25, S25) secondary blocks from at least one reference sub-set,
    - applying (R26, S26) the transformation to the secondary blocks in order to form a decoded block ($AZ_{n,m}$),
        so as to form a reference sub-set including the decoded blocks.

25. Decoding method according to Claim 24, characterised in that the formation step includes the multiplication of the source blocks by a predetermined scale factor ($z$), in order to form secondary blocks ($DZ_{n-1,m,k}$) having a number of coefficients dependent on the number of coefficients of the source blocks and the scale factor.

26. Decoding method according to either one of Claims 24 to 25, characterised in that the transformation ($T_{n,m}$) is a multilinear approximation.

27. Decoding method according to either one of Claims 24 to 25, characterised in that the transformation is a multilinear approximation combined with a geometric transformation.

28. Decoding method according to either one of Claims 24 to 25, characterised in that the transformation is a polynomial.

29. Decoding method according to any one of Claims 24 to 28, characterised in that, for the first sub-set to be decoded, the secondary blocks are formed in a predetermined sub-set ($G_0$).

**30.** Decoding method according to any one of Claims 24 to 29, characterised in that the set of data is a digital image (f).

**31.** Decoding method according to any one of Claims 24 to 29, characterised in that the set of data is a sequence of digital images ($f_n$).

**32.** Device (2) for coding a set of data representing physical quantities, said set being composed of sub-sets ($f_n$),

characterised in that it has (24):

- means of dividing sub-sets ($f_n$) into blocks of data to be coded ($A_{n,m}$) and into source blocks ($D_{n,m,1}$, $D_{n,m,K}$),
- means of selecting, for each of the blocks of data to be coded ($A_{n,m}$) of each of the sub-sets ($f_n$), a predetermined number of source blocks ($D_{n,m,1}$, $D_{n,m,K}$), in the respective sub-set of each of the blocks of data to be coded, and
- means of determining a transformation ($T_{n,m}$) between the selected source blocks and the block to be coded.

**33.** Device (2) for coding a set of data representing physical quantities, said set being composed of sub-sets ($f_n$),

characterised in that it has (24):

- means of dividing sub-sets ($f_n$) into blocks of data to be coded ($A_{n,m}$) and into source blocks ($D_{n,m,1}$, $D_{n,m,K}$),
- means of dividing at least one reference sub-set ($g_{n-1}$) into reference blocks, for each of the sub-sets,
- means of estimating the movement, for each of the blocks of data to be coded, of the block to be coded with respect to one of the reference blocks and, if an estimation criterion is not satisfied,
- means of selecting, for each of the data blocks of each of the sub-sets, a predetermined number of source blocks ($D_{n,m,1}$, $D_{n,m,K}$) in the respective sub-set of each of the blocks of data to be coded, and
- means of determining a transformation ($T_{n,m}$) between the selected source blocks and the block to be coded.

**34.** Coding device according to either one of Claims 32 to 33, characterised in that the division, selection and determination means are incorporated in:

- a controller (24),
- a read-only memory (23) containing a program for coding each of the data blocks and,
- a random access memory (25) containing registers adapted to record variables modified during the running of said program.

**35.** Device for decoding (5) a set of data representing physical quantities, the set being composed of sub-sets ($h_n$) which each include coded representations of blocks of data, each of the blocks being coded by means of a transformation ($T_{n,m}$) between the block and source blocks selected in the respective sub-set,

characterised in that it includes means (54) of applying the transformation to second source blocks, for each of the blocks of each of the sub-sets to be decoded, the second source blocks being formed in a sub-set containing blocks predetermined for the first iteration, and in a sub-set containing blocks decoded at the previous iteration for the following iterations.

**36.** Device (5) for decoding a set of data representing physical quantities, the set being composed of sub-sets ($h_n$) which each include coded representations of data blocks,

characterised in that it has (54):

- means of seeking, for each of the blocks ($A_{n,m}$) of each of the sub-sets to be decoded, whether the block is coded by block movement estimation,

and, in the event of a negative response, the block then being coded by means of a transformation ($T_{n,m}$) between the block and source blocks selected in the respective sub-set,

- means of applying the transformation to second source blocks for reconstructing the block ($AR_{n,m}$), the second source blocks being formed in a sub-set containing blocks predetermined for the first iteration, and a sub-set containing blocks decoded at the previous iteration for the following iterations.

**37.** Decoding device according to either one of Claims 35 to 36, characterised in that the application means are incorporated in:

- a controller (54),
- a read-only memory (53) containing a program for decoding each of the data blocks and,
- a random access memory (55) containing registers adapted to record variables modified during the running of said program.

**38.** Device for decoding a coded set of data representing physical quantities, the set including sub-sets ($h_n$) which each have coded representations of data blocks, each of the blocks being coded by means of a transformation ($T_{n,m}$) between the block and source blocks selected from at least one source sub-set,

characterised in that it includes, for each of the blocks of the first of the sub-sets to be decoded:

- means of forming secondary blocks ($DZ_{n-1,m,k}$) including a number of coefficients which is proportional to that of the source blocks,
- means of applying the transformation to the secondary blocks in order to form a decoded block ($AZ_{n,m}$),

so as to form a reference sub-set ($G_{n-1}$) including the decoded blocks,
then, for each of the blocks of each of the other sub-sets to be decoded:

- means of selecting secondary blocks from at least one reference sub-set,
- means of applying the transformation to the secondary blocks in order to form a decoded block ($AZ_{n,m}$),

so as to form a reference sub-set ($G_{n-1}$) including the decoded blocks.

39. Decoding device according to Claim 38, characterised in that the formation means are adapted to effect the multiplication of the source blocks by a predetermined scale factor ($z$), in order to form secondary blocks and having a number of coefficients dependent on the number of coefficients of the source blocks and the scale factor.

40. Decoding device according to either one of Claims 38 to 39, characterised in that the transformation ($T_{n,m}$) is a multilinear approximation.

41. Decoding device according to either one of Claims 38 to 39, characterised in that the transformation is a multilinear approximation combined with a geometric transformation.

42. Decoding device according to either one of Claims 38 to 39, characterised in that the transformation is a polynomial.

43. Decoding device according to any one of Claims 38 to 42, characterised in that, for the first sub-set to be decoded, the secondary blocks are formed in a predetermined sub-set ($G_0$).

44. Decoding device according to any one of Claims 38 to 42, characterised in that the set of data is a digital image ($f$).

45. Decoding device according to any one of Claims 38 to 42, characterised in that the set of data is a sequence of digital images ($f_n$).

46. Decoding device according to any one of Claims 38 to 45, characterised in that the formation, application and selection means are incorporated in:

- a controller (54)
- a read-only memory (53) containing a program for decoding each of the blocks of data, and
- a random access memory (55) containing registers adapted to record variables modified during the running of the said program.

47. Digital apparatus including means adapted to implement the coding method according to any one of Claims 1 to 20.

48. Digital apparatus including the coding device according to any one of Claims 32 to 34.

49. Digital apparatus including means adapted to implement the decoding method according to any one of Claims 21 to 31.

50. Digital apparatus including the decoding device according to any one of Claims 35 to 46.

51. Storage medium storing a program for coding a set of data representing physical quantities, said set being composed of sub-sets ($f_n$),

said program including, for each of the sub-sets, the steps of:

- division (E2) of the sub-set into blocks of data to be coded ($A_{n,m}$), and into source blocks ($D_{n,m,1}$, $D_{n,m,K}$),

then, for each of the blocks of data to be coded ($A_{n,m}$), the steps of:

- selection (E9) of a predetermined number of source blocks ($D_{n,m,1}$, $D_{n,m,K}$) in said sub-set,
- determination (E10) of a transformation ($T_{n,m}$) between the selected source blocks and the block to be coded.

52. Storage medium storing a program for coding a set of data representing physical quantities, said set being composed of sub-sets ($f_n$),

said program including, for each of the sub-sets, the steps of:

- division (E2) of the sub-set into blocks of data to be coded ($A_{n,m}$) and into source blocks ($D_{n,m,1}$, $D_{n,m,K}$),
- division (E4) of at least one reference sub-set ($g_{n-1}$) into reference blocks ($D_{n-1,m,j}$),

then, for each of the blocks of data to be coded, the steps of:

- estimation of the movement (E6) of the block to be coded with respect to one of the reference blocks and, if an estimation criterion is not satisfied (E7),
- selection (E9) of a predetermined number of source blocks ($D_{n,m,1}$, $D_{n,m,K}$) in said sub-set,
- determination (E10) of a transformation ($T_{n,m}$) between the source blocks selected and the block to be coded.

53. Storage medium storing a program for decoding a set of data representing physical quantities, said set being composed of sub-sets ($h_n$) which each include coded representations of blocks of data, each of the blocks being coded by means of a transformation ($T_{n,m}$) between the block and first source blocks formed in the sub-set,

said program including, for each of the blocks of each of the sub-sets to be decoded, the iterative application (E28) of the transformation to second source blocks in order to decode the block ($AR_{n,m}$), the second source blocks being formed in a sub-set containing blocks predetermined for the first iteration, and in a sub-set containing blocks decoded at the previous iteration for the following iterations.

54. Storage medium storing a program for decoding a set of data representing physical quantities, said set being composed of sub-sets ($h_n$) which each include coded representations of blocks of data,

said program including, for each of the blocks of each of the sub-sets to be decoded, the steps of:

- seeking (E24) whether the block is coded by block movement estimation,

and, in the case of a negative response, the block then being coded by means of a transformation ($T_{n,m}$) between the block and first source blocks formed in the sub-set:

- iterative application (E28) of the transformation to second source blocks for decoding the block ($AR_{n,m}$), the second source blocks being formed in a sub-set containing blocks predetermined for the first iteration, and in a sub-set containing blocks decoded at the previous iteration for the following iterations.

55. Storage medium storing a program for decoding a set of data representing physical quantities, the set including sub-sets ($h_n$) which each include coded representations of blocks of data, each of the blocks being coded by means of a transformation ($T_{n,m}$) between the block and source blocks selected from at least one source sub-set, said program including, for each of the blocks of the first of the sub-sets to be decoded, the steps of:

- forming (R22, R24, S22, S24) secondary blocks ($DZ_{n-1,m,k}$) including a number of coefficients which is proportional to that of the source blocks,
- applying (R26, S26) the transformation to the secondary blocks in order to form a decoded block ($AZ_{n,m}$),

so as to form a reference sub-set ($G_{n-1}$) including the decoded blocks,
then, for each of the blocks of each of the other sub-sets to be decoded, the step of:

- selecting (R25, S25) secondary blocks from at least one reference sub-set,
- applying (R26, S26) the transformation to the secondary blocks in order to form a decoded block ($AZ_{n,m}$),

so as to form a reference sub-set including the decoded blocks.

56. Storage medium according to claim 51, characterised in that said storage medium is detachably mountable on a device (2) for coding a set of data representing physical quantities, said set being composed of sub-sets ($f_n$), said device having (24):

- means of dividing sub-sets ($f_n$) into blocks of data to be coded ($A_{n,m}$) and into source blocks ($D_{n,m,1}$, $D_{n,m,K}$),
- means of selecting, for each of the blocks of data to be coded ($A_{n,m}$) of each of the sub-sets ($f_n$), a predetermined number of source blocks ($D_{n,m,1}$, $D_{n,m,K}$), in the respective sub-set of each of the blocks of data to be coded, and
- means of determining a transformation ($T_{n,m}$) between the selected source blocks and the block to be coded.

57. Storage medium according to claim 52, characterised in that said storage medium is detachably mountable on a device (2) for coding a set of data representing physical quantities, said set being composed of sub-sets ($f_n$), said device having (24):

- means of dividing sub-sets ($f_n$) into blocks of data to be coded ($A_{n,m}$) and into source blocks ($D_{n,m,1}$, $D_{n,m,K}$),
- means of dividing at least one reference sub-set ($g_{n-1}$) into reference blocks, for each of the sub-sets,
- means of estimating the movement, for each of the blocks of data to be coded, of the block to be coded with respect to one of the reference blocks and, if an estimation criterion is not satisfied,
- means of selecting, for each of the data blocks of each of the sub-sets, a predetermined number of source blocks ($D_{n,m,1}$, $D_{n,m,K}$) in the respective sub-set of each of the blocks of data to be coded, and

- means of determining a transformation ($T_{n,m}$) between the selected source blocks and the block to be coded.

58. Storage medium according to claim 53, characterised in that said storage medium is detachably mountable on a device (2) for decoding (5) a set of data representing physical quantities, the set being composed of sub-sets ($h_n$) which each include coded representations of blocks of data, each of the blocks being coded by means of a transformation ($T_{n,m}$) between the block and source blocks selected in the respective sub-set, said device including means (54) of applying the transformation to second source blocks, for each of the blocks of each of the sub-sets to be decoded, the second source blocks being formed in a sub-set containing blocks predetermined for the first iteration, and in a sub-set containing blocks decoded at the previous iteration for the following iterations.

59. Storage medium according to claim 54, characterised in that said storage medium is detachably mountable on a device (2) for decoding a set of data representing physical quantities, said set being composed of sub-sets ($h_n$) which each include coded representations of data blocks, said device having (54):

- means of seeking, for each of the blocks ($A_{n,m}$) of each of the sub-sets to be decoded, whether the block is coded by block movement estimation,
    and, in the event of a negative response, the block then being coded by means of a transformation ($T_{n,m}$) between the block and source blocks selected in the respective sub-set,
- means of applying the transformation to second source blocks for reconstructing the block ($AR_{n,m}$), the second source blocks being formed in a sub-set containing blocks predetermined for the first iteration, and a sub-set containing blocks decoded at the previous iteration for the following iterations.

60. Storage medium according to claim 55, characterised in that said storage medium is detachably mountable on a device (2) for decoding a coded set of data representing physical quantities, the set including sub-sets ($h_n$) which each have coded representations of data blocks, each of the blocks being coded by means of a transformation ($T_{n,m}$) between the block and source blocks selected from at least one source sub-set, said device including, for each of the blocks of the first of the sub-sets to be decoded:

- means of forming secondary blocks ($DZ_{n-1,m,k}$) including a number of coefficients which is proportional to that of the source blocks,
- means of applying the transformation to the secondary blocks in order to form a decoded block ($AZ_{n,m}$),

    so as to form a reference sub-set ($G_{n-1}$) including the decoded blocks,
    then, for each of the blocks of each of the other sub-sets to be decoded:

- means of selecting secondary blocks from at least one reference sub-set,
- means of applying the transformation to the secondary blocks in order to form a decoded block ($AZ_{n,m}$),
    so as to form a reference sub-set ($G_{n-1}$) including the decoded blocks.

61. Storage medium according to either one of claims 51 to 60, characterised in that said storage medium is a floppy disk or a CD-ROM.

22

27

| Source of uncoded data | → | Coding device | → | Means using coded data |
|---|---|---|---|---|

1

2

3

**Fig. 1**

52

57

| Means using coded data | → | Decoding device | → | Means using decoded data |
|---|---|---|---|---|

4

5

6

**Fig. 2**

*Fig. 3*

Fig. 4

**Fig. 5**

**Fig. 6**

**Fig. 7**

**Fig. 8a**

**Fig. 8b**

**Fig. 8c**

**Fig. 8d**

**Fig. 8e**

**Fig. 8f**

**Fig. 9**

n = 1 — E41

Division of the image $f_n$ into blocks $A_{n,m}$ of initial size — E42

E43 — n = 1 ? — YES

NON

Division of $g_{n-1}$ into blocks — E44

Matching — E45

E46 — criterion ?

YES — NO

storage : $V_{n,m,j}$ , $I_{n,m}$

E47

Multilinear approximation $T_{n,m}$    $d ( A_{n,m} , AR_{n,m})$ — E48

E49 — $d ( A_{n,m} , AR_{n,m}) < S$ ?

YES — NO

E50 — storage $T_{n,m}$ ← YES — Minimum size ? — E56

NO

E51 — decoding of block

E53 — Following block

NO

E52 — last block of the image $f_n$ ? — YES — E54

E55 — following image ← NO — last image of the sequence ? — YES — END

E57 — division into sub-blocks $A_{n,m}^1$ à $A_{n,m}^{M_1}$

*Fig. 10*

33

*Fig. 11*

*Fig. 12*

*Fig. 13*

n = 1 — R1

Division of the image
$f_n$ into blocks $A_{n,1}$ to $A_{n,M}$ — R2

R3

n = 1 ? — YES → $g_{n-1} = g_0$ — R4

NO

m = 1 — R5

Division of $g_{n-1}$ into blocks — R6

Selection from $g_{n-1}$ : { $D_{n-1, m, k}$ } — E7

$T_{n,m} = \Sigma_k a_{n, m, k} * D_{n-1, m, k} + b_{n, m}$
$d ( A_{n,m} , AR_{n, m})$ — R8

Storage :          $T_{n,m} = \{a_{n, m, k} , b_{n, m}\}$ — R9

R10

NO ← m = M ? → YES

m = m + 1                    R12

R11                    NO ← n = N ? → YES → END

$a_{n, m, k} , b_{n,m} \dashrightarrow AR_{n, m} \dashrightarrow g_n$ — R13

n = n + 1 — R14

*Fig. 14*

**Fig. 15a**

**Fig. 15b**

**Fig. 15c**

**Fig. 15d**

**Fig. 15e**

**Fig. 15f**

R20 — $n = 1$

R21 — Reading of scale factor z

R22 — $G_0 = z.g_0$

R23 — $m = 1$

R24 — Division of $G_{n-1}$ into blocks

R25 — Selection from $G_{n-1}$ $\{ DZ_{n-1, m, k} \}$

R26 — $a_{n, m, k}$ , $b_{n, m}$ / $DZ_{n-1, m, k}$ --> $AZ_{n, m}$

R27 — $m = M$ ?

NO — R28 — $m = m + 1$

YES — R29 — $AZ_{n, m}$ --> $G_n$

R30 — $n = N$ ?

NO ... YES --> END

R300 — $n = n + 1$

**Fig. 16**

38

n = 1 — R31

division of the image $f_n$
into blocks $A_{n,m}$ of initial size — R32

Multilinear approximation
$T_{n,m}$    $d(A_{n,m}, AR_{n,m})$ — R33

R34

YES    $d(A_{n,m}, AR_{n,m}) < S$    NO
?

R40

YES    minimum
size
?

NO

R41

division into sub-blocks
$A_{n,m}^1$ à $A_{n,m}^{M_1}$

R37    decoding of the
block
storage of    $T_{n,m}$ — R35

following block

NO    R36

last block
of the image
$f_n$ ?

R39    YES

following image    R38

NO    last image
of the sequence
?

YES

END    *Fig. 17*

39

n = 1 — R400

Reading of scale factor z — R410

$G_0 = z.g_0$ — R420

First block - reading of tree — R430

Division of $G_{n-1}$ into blocks — R440

Selection from $G_{n-1}\{:DZ_{n-1, m, k}\}$ — R450

$a_{n, m, k}$ , $b_{n,m}$ / $DZ_{n-1, m, k}$ --> $AZ_{n, m}$ — R460

R470

NO — last block ? — YES

R480

following block reading of tree

$AZ_{n, m}$ --> $G_n$ — R490

R500

NO — n = N ? — YES — END

n = n + 1 — R510

*Fig. 18*

f, M, N — S1

division of the image
f into blocks $A_1$ à $A_M$ — S2

S3 — n = 1 → $g_{n-1} = g_0$ — S4

m = 1 — S5

Division of $g_{n-1}$ into blocks — S6

Selection from $g_{n-1}$ : $\{ D_{n-1, m, k} \}$ — S7

$T_{n,m} = \Sigma_k a_{n, m, k} * D_{n-1, m, k} + b_{n, m}$
$d ( A_m , AR_{n, m})$ — S8

storage : $T_{n,m} = (a_{n, m, k} , b_{n, m})$ — S9

S10 — m = M ?
NO / YES

m = m + 1 — S11

transmission of $h_n$ — S12

S13 — n = N ?
NO / YES → END

$a_{n, m, k} , b_{n,m} \dashrightarrow AR_{n, m} \dashrightarrow g_n$ — S14

n = n + 1 — S15

*Fig. 19*

128 pixels

f

{T$_{1,m}$}

96 pixels

{T$_{2,m}$}

{T$_{3,m}$}

{T$_{1,m}$}

{T$_{2,m}$}

{T$_{3,m}$}

g$_0$

g$_1$

g$_2$

g$_3$

## Fig. 20

{T$_{1,m}$}

{T$_{2,m}$}

...

G$_0$

G$_1$

G$_2$

## Fig. 25

Fig. 21

Fig. 22

Fig. 23a

Fig. 23b

Fig. 23c

Fig. 23d

Fig. 23e

Fig. 23f

**Fig. 24**